# EUROPÄISCHE PATENTSCHRIFT

(11) **EP 2 318 264 B1**
(45) Veröffentlichungstag und Bekanntmachung des Hinweises auf die Patenterteilung: **28.03.2012**
(21) Anmeldenummer: 08801886.6
(22) Anmeldetag: 06.09.2008
(51) Int. Cl.: B62D 24/04, B62D 27/04, B62D 33/02, B62D 25/20, B62D 27/06

(54) **LASTFAHRZEUG**
TRUCK
VÉHICULE UTILITAIRE

(43) Veröffentlichungstag der Anmeldung: 11.05.2011
(73) Patentinhaber: Crossmobil GmbH, 77656 Offenburg (DE)
(72) Erfinder: PFAFF, Berthold, 77736 Zell am Harmersbach (DE)
(74) Vertreter: Huwer, Andreas
(86) Internationale Anmeldenummer: PCT/EP2008/007294
(87) Internationale Veröffentlichungsnummer: WO 2010/025754

(56) Entgegenhaltungen:
- EP-A- 1 231 129
- WO-A-00/38970
- WO-A-00/40450

## Beschreibung

Die Erfindung betrifft ein Lastfahrzeug mit einem biegesteifen, aber verwindungsweichen Fahrgestellrahmen, auf dem ein biege- und verwindungssteifer Aufbau angeordnet ist, der mindestens zwei, quer zur Fahrzeuglängsrichtung voneinander beabstandete Längsträger aufweist, die durch wenigstens einen zwischen diesen angeordneten Querträger miteinander verbunden sind, wobei der Aufbau an zumindest drei Stellen über Bewegungslager direkt oder indirekt über einen Hilfsrahmen mit dem Fahrgestellrahmen verbunden ist, wobei wenigstens eines der Bewegungslager als Schwenklager ausgebildet ist, dessen Schwenkachse etwa in der Fahrzeuglängsmittelachse verläuft, und wobei wenigstens zwei Bewegungslager als Auflager ausgebildet sind, die seitlich beidseits der Schwenkachse angeordnet und in Fahrzeuglängsrichtung von dem Schwenklager beabstandet sind.

Ein derartiges Lastfahrzeug ist aus EP 1 231 129 B1 bekannt. Es hat einen biegesteifen, aber verwindungsweichen Fahrgestellrahmen, auf dem ein verwindbarer Hilfsrahmen angeordnet ist. Auf dem Hilfsrahmen ist ein biege- und verwindungssteifer Aufbau vorgesehen, der zwei Längsträger aufweist, die seitlich voneinander beabstandet und durch Querträger miteinander verbunden sind. Die Längsträger weisen jeweils ein etwa trapezförmiges, offenes Hohlprofilteil auf, das an seinen Längsrändern durch Schweißnähte mit einer Bodenplatte des Aufbaus zu einem in Umfangsrichtung geschlossenen Hohlprofil verbunden ist. Der Aufbau ist an vier Stellen mit Hilfe von Bewegungslagern über den Hilfsrahmen mit dem Fahrgestellrahmen verbunden. Zwei der Bewegungslager sind als Schwenklager ausgebildet, deren Schwenkachse etwa in der Fahrzeuglängsmittelachse verläuft. Zwei weitere Bewegungslager sind als Auflager ausgestaltet, die seitlich beidseits der Schwenkachse angeordnet und in Fahrzeuglängsrichtung etwa mittig zwischen den Schwenklagern vorgesehen sind. Das Lastfahrzeug hat sich in der Praxis vor allem dadurch bewährt, dass zwischen den Längsträgern ein Bewegungsfreiraum gebildet ist, der beim Verwinden von Fahrgestell- und Hilfsrahmen einen Teilbereich des Hilfsrahmens aufnimmt. Dadurch ergibt eine geringe Bauhöhe der aus dem Fahrgestell, dem Hilfsrahmen, den Längsträgern und der Bodenplatte gebildeten Anordnung und dennoch verwindet sich der Aufbau beim Befahren von unebenem Gelände nur sehr wenig.

Ein Nachteil des Lastfahrzeug besteht jedoch noch darin, dass die Bodenplatte aus Stahl besteht. Bei bestimmten Anwendungen, wie zum Beispiel bei Munitionstransporten wird jedoch zur Reduzierung der Gefahr einer Funkenbildung von den Benutzern des Lastfahrzeug ein Holzboden bevorzugt. Ungünstig ist außerdem, dass bei der Fertigung des Aufbaus relativ lange Schweißnähte hergestellt werden müssen, an denen Fehler, wie z.B. Poren, Lunker und/oder Risse auftreten können. Die Schweißnähte müssen deshalb einer Fehlerprüfung beispielsweise durch Röntgen oder Ultraschall unterzogen werden. Beim Auffinden eines Fehlers wird die Schweißnaht an der Fehlerstelle aufgeflext und dann neu geschweißt. Die damit verbundenen Arbeiten sind mit einer Staubbelastung verbunden, die gesundheitsschädlich ist und die Produktionsanlagen u.a. mit Metallstaub verschmutzt, was insbesondere bei Elektrogeräten problematisch ist. Ungünstig ist außerdem, dass die Schweißnähte eine hohe Maßgenauigkeit der miteinander zu verschweißenden Teile erfordert, weil eine Überbrückung von Fügespalten beim Schweißen nur begrenzt möglich ist. Insbesondere bei großen Aufbauten sind deshalb entsprechende Fertigungsanlagen mit Einspann- und Positioniervorrichtungen für die zu schweißenden Teile erforderlich. Aus diesem Grund ist es auch entsprechend aufwendig, die Ferfigungsanlagen so zu gestalten, dass Aufbauten mit unterschiedlichen Abmessungen, wie zum Beispiel kurze und lange Aufbauten und/oder unterschiedlich breite Aufbauten wahl- oder wechselweise mit derselben Produktionsanlage produziert werden können. Schließlich ist bei größeren Fahrzeugen auch zu beachten, dass beim Schweißen Verzug auftritt. Ferner besteht das Problem, dass der Korrosionsschutz der Aufbauten aufwändig ist, da beispielsweise für eine Verzinkung des Aufbaus entsprechend große Tauchbäder benötigt werden.

Es besteht deshalb die Aufgabe, ein Lastfahrzeug der eingangs genannten Art zu schaffen, das es ermöglicht, die Längsträger des Aufbaus in geringer Höhe anzuordnen, das auf einfache maschinelle Weise hergestellt werden kann und bei dem der Aufbau beim Verwinden des Fahrgestellrahmens weitestgehend verwindungsfrei bleibt.

Diese Aufgabe wird dadurch gelöst, dass die Längsträger jeweils als offenes Profil und der mindestens eine Querträger als torsionssteifes Hohlprofil ausgestaltet sind, dass am Querträger für jeden Längsträger jeweils mindestens ein dem betreffenden Längsträger zugewandter Verbindungsflansch angeordnet ist, und dass die Verbindungsflansche mit Hilfe von Schrauben, Nieten und/oder Schließringbolzen mit den Längsträgern verbunden sind.

Überraschender Weise hat sich herausgestellt, dass der Aufbau des erfindungsgemäßen Lastfahrzeugs trotz der als offene Profile ausgestalteten Längsträger eine hohe Biege- und Verwindungssteifigkeit ermöglicht. Unter einem offenen Profil wird ein Profil verstanden, das quer zur Fahrzeuglängsmittelachse einen von einer geraden Linie abweichenden, nicht ringförmig geschlossenen Verlauf aufweist. Durch die offenen Längsträger mit dem dazwischen befindlichen, als Hohlprofil ausgestalteten Querträger ergibt sich außerdem eine geringe Bauhöhe der aus den Längsträgern und dem Querträger gebildeten Anordnung. Das Hohlprofil verläuft vorzugsweise einer von den Längsträgern aufgespannten Ebene oder einer parallel dazu verlaufenden Ebene quer und insbesondere rechtwinklig zur Fahrzeuglängsrichtung. Das mindestens eine Schwenklager kann in Richtung der Fahrzeuglängsmittelachse von dem Hohlprofil beabstandet sein, so dass das Schwenklager ganz oder teilweise in dem zwischen den Längsträgern befindlichen Raum angeordnet sein kann. Da das Hohlprofil mit Hilfe von Schrauben, Nieten und/oder Schließringbolzen torsionssteif mit den Längsträgern verbunden ist, können bei der Fertigung des Lastfahrzeugs das Hohlprofil und die Längsträger ohne Schweißarbeiten auf einfache Weise montiert werden. Dadurch ist es insbesondere möglich, mit derselben Produktionsanlage Aufbauten mit unterschiedlichen Abmessungen zu fertigen.

Bei einer zweckmäßigen Ausgestaltung der Erfindung sind die Stirnenden des Hohlprofils mit den Verbindungsflanschen verschweißt. Da das Hohlprofil im Vergleich zu den Längsträgern relativ kleine Abmessungen aufweist, können bei der Fertigung des Lastfahrzeugs die Schweißarbeiten an den Verbindungsflanschen mit geringem Aufwand durchgeführt werden. Danach kann das Hohlprofil ggf. mit einer Korrosionsschutzschicht beschichtet werden.

Bei einer bevorzugten Ausführungsform der Erfindung sind die den einzelnen Längsträgern zugewandten Verbindungsflansche als Flanschplatten ausgestaltet, die durch mindestens ein Hohlprofilteil torsionssteif miteinander verbunden sind, wobei die Flanschplatten quer zur Längserstreckung des mindestens einen Hohlprofilteils seitlich über dieses überstehen und Lochungen für den Durchtritt der Schrauben, Nieten und/oder Schließringbolzen aufweisen. Die Schrauben, Nieten und/oder Schließringbolzen sind dann bei der Montage des Lastfahrzeugs an den Flanschplatten gut zugänglich. Es ist aber auch möglich, dass die Verbindungsflansche und die ggf. darin vorgesehenen Lochungen vollständig innerhalb der Außerkontur des Hohlprofils bzw. dessen gerader Verlängerung angeordnet sind.

Bei einer Weiterbildung der Erfindung sind die Flanschplatten durch mindestens zwei in Richtung der Fahrzeuglängsmittelachse zueinander beabstandete Hohlprofilteile torsionssteif miteinander verbunden. Dadurch ergibt sich bei geringem Gewicht ein besonders torsionssteifer Querträger. Die Flanschplatten liegen vorzugsweise jeweils flächig an einem Wandungsbereich des zu der Flanschplatte benachbarten Längsträgers an. Der Querträger ist bevorzugt derart gestaltet, dass bei der Montage des Lastfahrzeugs mehrere baugleiche Querträger direkt übereinander gestapelt werden können.

Vorteilhaft ist, wenn das mindestens eine Hohlprofil ein kreiszylindrisches Hohlprofil und/oder ein vorzugsweise als Rechteckprofil ausgestaltetes Kastenprofil umfasst. Der Querträger ist dann kostengünstig herstellbar. Die Breite des Kastenprofils kann zwischen 200 und 600 mm und vorzugsweise zwischen 300 und 500 mm betragen. Die Höhe des Kastenprofils kann zwischen 80 und 160 mm und bevorzugt zwischen 100 und 140 mm liegen.

Bei einer bevorzugten Ausgestaltung der Erfindung sind die Längsträger als Z-Profile ausgestaltet, die jeweils zwei durch einen Längssteg miteinander verbundene Schenkelteile aufweisen, wobei die Schrauben, Nieten und/oder Schließringbolzenvorzugsweise die Längsstege und die Verbindungsflansche durchsetzen. Die Längsträger ermöglichen dann eine hohe Biegesteifigkeit bezüglich einer quer zur Fahrzeuglängsachse in horizontaler Richtung verlaufenden Biegeachse. Die Ebenen, in denen die Schenkelteile der Längsträger angeordnet sind, verlaufen vorzugsweise parallel zueinander und jeweils rechtwinklig zur Ebene des Längsstegs. Die Schenkelteile können auch einen von einer Ebene abweichenden, beispielsweise winkelförmigen Verlauf aufweisen.

Vorteilhaft ist, wenn die Längsträger zumindest ein vorderes Trägerteil, ein hinteres Trägerteils und ein zwischen diesen angeordnetes Zwischenstück aufweisen, wobei die Trägerfieile und das Zwischenstück in gerader Verlängerung zueinander angeordnet sind, wobei die den Längsträgern zugewandten Verbindungsflansche jeweils das Zwischenstück des betreffenden Längsträgers überbrücken, und wobei die Trägerteile und das Zwischenstück jeweils mit Hilfe von Schrauben, Nieten und/oder Schließringbolzen mit dem ihnen zugewandten Verbindungsflansch verbunden sind. Dabei ist es sogar möglich, dass in den Trägerteilen und den Verbindungsflanschen derart Lochungen für die Aufnahme der Schrauben, Nieten und/oder Schließringbolzen angeordnet sind, dass die Längsträger bei ihrer Montage in mindestens zwei unterschiedlichen Abständen zueinander mit den Verbindungsflanschen verbunden werden können. Die Längsträger können dann zur Herstellung unterschiedlich langer Aufbauten bei ihrer Montage entweder ohne das Zwischenstück mit ihren einander zugewandten Enden vorzugsweise direkt aneinander angrenzend mit dem Querträger verbunden werden oder die Längsträger werden mit axialem Abstand zueinander an dem Querträger montiert, wobei der Abstand durch das Zwischenstück überbrückt wird.

Bei einer zweckmäßigen Ausgestaltung der Erfindung weist der Aufbau einen Außenrahmen mit einem vorderen und einem hinteren Rahmenquerstück sowie zwei diese miteinander verbindenden Rahmenlängsstücken auf, wobei das vordere Rahmenquerstück und das hintere Rahmenquerstück Verbindungsstellen aufweisen, die mit Hilfe von Schrauben, Nieten und/oder Schließringbolzen mit den Längsträgern verbunden sind. Somit kann bei der Fertigung des Lastfahrzeug der Außenrahmen ohne zu Schweißen mit den Längsträgern verbunden werden.

Vorteilhafft ist, wenn die von dem mindestens einen Hohlprofil beabstandeten Endbereiche der vorderen Trägerteile jeweils über ein Verlängerungsstück mit dem vorderen Rahmenquerstück und/oder die von dem mindestens einen Hohlprofil beabstandeten hinteren Endbereiche der hinteren Trägerteile jeweils über ein Verlängerungsstück mit dem hinteren Rahmenquerstück verbunden sind. Bei der Herstellung des Lastfahrzeugs können dann für unterschiedlich Lange Aufbauten dieselben Längsträger verwendet werden. Die Verlängerungsstücke sind vorzugsweise über Schrauben, Nieten und/oder Schließringbolzen einerseits mit den Längsträgern und andereseits dem Außenrahmen verbunden sein.

Bei einer anderen vorteilhaften Ausführungsform der Erfindung sind zwischen dem vorderen Rahmenquerstück und dem hinteren Rahmenquerstück Unterstützungsprofile für das Bodenteil angeordnet, die im Wesentlichen parallel zu den Rahmenquerstücken verlaufen, wobei ein erster Endbereich jedes Unterstützungsprofils jeweils mit Hilfe von Schrauben, Nieten und/oder Schließringbolzen mit einem Längsträger und ein zweiter Endbereich jedes Unterstützungsprofils jeweils mit Hilfe von Schrauben, Nieten und/oder Schließringbolzen mit einem Rahmenlängsstück des Außenrahmens verbunden sind. Bei der Herstellung des Lastfahrzeug können dann für Aufbauten unterschiedlicher Breite baugleiche Längs- und Querträger verwendet werden, wobei jeweils nur die seitlichen Unterstützungsprofile unterschiedliche Abmessungen aufweisen müssen. Dadurch ist es möglich, mit einem aus einer relativ kleinen Anzahl von unterschiedlichen Bauteilen bestehenden Bausatz eine Vielzahl unterschiedlicher Fahrzeugvarianten zu fertigen.

Vorteilhaft ist, wenn mindestens ein Unterstützungsprofil zumindest einen ersten Abschnitt und einen zweiten Abschnitt aufweist, die in Erstreckungsrichtung des Unterstützungsprofils zueinander versetzt angeordnet sind und sich zumindest bereichsweise überdecken, dass die Abschnitte Lochungen für den Durchtritt von Schrauben, Nieten und/oder Schließringbolzen aufweisen, und dass Lochungen derart angeordnet sind, dass in mindestens zwei in Erstreckungsrichtung des Unterstützungsprofils zueinander versetzten Relativpositionen der Abschnitte jeweils mindestens zwei Lochungen des ersten Abschnitts mit mindestens zwei Lochungen des zweiten Abschnitts fluchten. Dadurch ist es möglich, bei der Montage des Aufbaus den Überdeckungsbereich der Abschnitte zu variieren, um unterschiedlich lange Unterstützungsprofile und somit unterschiedlich breite Aufbauten in Kleinserie kostengünstig herzustellen.

Bei einer Weiterbildung der Erfindung ist zwischen den Längsträgern mindestens eine damit verschraubte und/oder vernietete Quertraverse angeordnet, wobei das Schwenklager ein erstes Lagerteil und ein verschwenkbar damit verbundenes zweites Lagerteil aufweist, und wobei das erste Lagerteil an der Quertraverse und das zweite Lagerteil an einem Querprofilteil des Hilfsrahmens oder des Fahrgestellrahmens angeordnet ist. Dabei kann zumindest Lageroberteil ganz oder teilweise in einem zwischen den Längsträgern befindlichen Freiraum angeordnet sein, was eine niedrige Bauhöhe der aus den Längsträgern, dem Querträger und dem Schwenklager gebildeten Anordnung ermöglicht.

Vorteilhaft ist, wenn das erste Lagerteil einen Vorsprung hat, der zwei vorzugsweise parallel zur Fahrzeuglängsmittelachse verlaufende, schräg zueinander angeordnete erste Wandungen aufweist, wenn das zweite Lagerteil eine Vertiefung aufweist, die zwei etwa parallel zu den ersten Wandungen angeordnete zweite Wandungen hat, und wenn zwischen den ersten Wandungen und den zweiten Wandungen mindestens eine erste Elastomenwerkstoffschicht angeordnet ist, welche die Lagerteile miteinander verbindet. Dadurch ergibt sich ein robustes, kostengünstig herstellbares Schwenklager, das sowohl in vertikaler Richtung, als auch in horizontaler Richtung quer zur Fahrzeuglängsachse wirkende Lagerkräfte übertragen kann. Außerdem kann das Schwenklager auch kleinere, in Richtung der Fahrzeuglängsmittelachse verlaufende Torsionsmomente übertragen.

Bei einer vorteilhaften Ausgestaltung der Erfindung weist das Lastfahrzeug mindestens zwei Schwenklager auf, deren Schwenkachsen in der Fahrzeuglängsmittelachse verlaufen, wobei die Auflager in Fahrzeuglängsrichtung jeweils von diesen Schwenklagern beabstandet sind. Dadurch kann insbesondere bei Aufbauten mit großer Länge eine gleichmäßigere Abstützung des Aufbaus am Hilfsrahmen bzw. am Fahrgestell erreicht werden.

Zweckmäßigerweis ist mindestens ein Längsträger über wenigstens eine an einem Zubehörteil angeordnete Querstrebe mit einem zu dem Längsträger benachbarten Rahmenlängsstück des Außenrahmens verbunden, wobei die Querstrebe an einem dem Längsträger zugewandten Endbereich mindestens eine erste Klemme und an einem dem Rahmenlängsstück zugewandten Endbereich wenigstens eine zweite Klemme aufweist, und wobei an der ersten Klemme ein Randbereich des Längsträgers und an der zweiten Klemme ein Randbereich des Rahmenlängsstücks eingespannt ist. Dadurch ist es möglich, das Zubehörteil an dem Aufbau zu befestigen, ohne in dem Aufbau Löcher für die Aufnahme von Schrauben, Nieten und/oder Schließringbolzen zu bohren.

Nachfolgend sind Ausführungsbeispiele der Erfindung anhand der Zeichnung näher erläutert. Es zeigt
- Fig. 1: eine Seitenansicht eines Lastfahrzeugs,
- Fig. 2: eine Aufsicht auf einen Hilfsrahmen des Lastfahrzeugs,
- Fig. 3: eine Unteransicht eines auf dem Hilfsrahmen angeordneten Aufbaus,
- Fig. 4: eine verwindungssteife Tragkonstruktion des Aufbaus, die Längsträger hat, die durch einen Hohlprofile aufweisenden torsionssteifen Querträger miteinander verbunden sind,
- Fig. 5: eine Seitenansicht der in Fig. 4 gezeigten Tragkonstruktion,
- Fig. 6: eine Aufsicht auf die in Fig. 4 gezeigte Tragkonstruktion,
- Fig. 7: eine Aufsicht auf die Rückseite der in Fig. 4 gezeigten Tragkonstruktion,
- Fig. 8A: einen Längsschnitt durch die Tragkonstruktion, wobei die Schnittebene durch die Hohlprofile verläuft,
- Fig. 8B: eine Seitenansicht eines Querträgers,
- Fig. 9A und 9B: eine Unteransicht des Querträgers,
- Fig. 10: eine Aufsicht auf den Querträger,
- Fig. 11: eine Ansicht auf die Vorderseite des Querträgers,
- Fig. 12: einen Teilquerschnitt durch den Aufbau, auf dem ein Unterstützungsprofil erkennbar ist, das einen Längsträger mit einem Rahmenlängsstück eines Außenrahmens verbindet,
- Fig. 13: eine Schrägansicht des Unterstützungsprofils,
- Fig. 14: eine Unteransicht einer Quertraverse, an der ein Lageroberteil eines Schwenklagers angeordnet ist,
- Fig. 15: Eine Ansicht auf die Vorderseite der in Fig. 14 gezeigten Anordnung,
- Fig. 16: einen Teilquerschnitt durch den Aufbau, auf dem das Schwenklager erkennbar ist,
- Fig. 17: eine Ansicht auf die Unterseite einer Quertraverse, an der ein Lagerunterteil eines Schwenklagers angeordnet ist,
- Fig. 18: einen Teillängsschnitt durch das Lastfahrzeug im Bereich des Schwenklagers,
- Fig. 19: einen Querschnitt durch das Lastfahrzeug, bei dem zwei Auflager, über die der Aufbau auf einem Hilfsrahmen gelagert ist, erkennbar sind,
- Fig. 20: einen Teilquerschnitt durch das Lastfahrzeugs im Bereich eines Auflagers,
- Fig. 21: einen Teillängsschnitt durch das Lastfahrzeugs im Bereich des Auflagers,
- Fig. 22: einen Querschnitt durch das Lastfahrzeug in Höhe eines Schwenkgelenks, wobei das Fahrgestell in Horizontallage angeordnet ist,
- Fig. 23: eine Darstellung ähnlich Fig. 22, wobei jedoch die Räder des Lastfahrzeugs derart auf unebenem Gelände angeordnet sind, dass der Fahrgestellrahmen um die Fahrzeuglängsachse tordiert ist,
- Fig. 24: eine Ansicht auf die Rückseite des Lastfahrzeugs beim Überfahren von Bodenunebenheiten,
- Fig. 25: eine Unteransicht eines Tankfahrzeugs,
- Fig. 26: einen Teilquerschnitt durch das Tankfahrzeug,
- Fig. 27: eine Aufsicht auf ein Lastfahrzeug, das zum Transport eines Containers oder Shelters vorgesehen ist, und
- Fig. 28: eine Rückseitenansicht eines mit einem Container oder Shelter beladenen Kraftfahrzeugs.

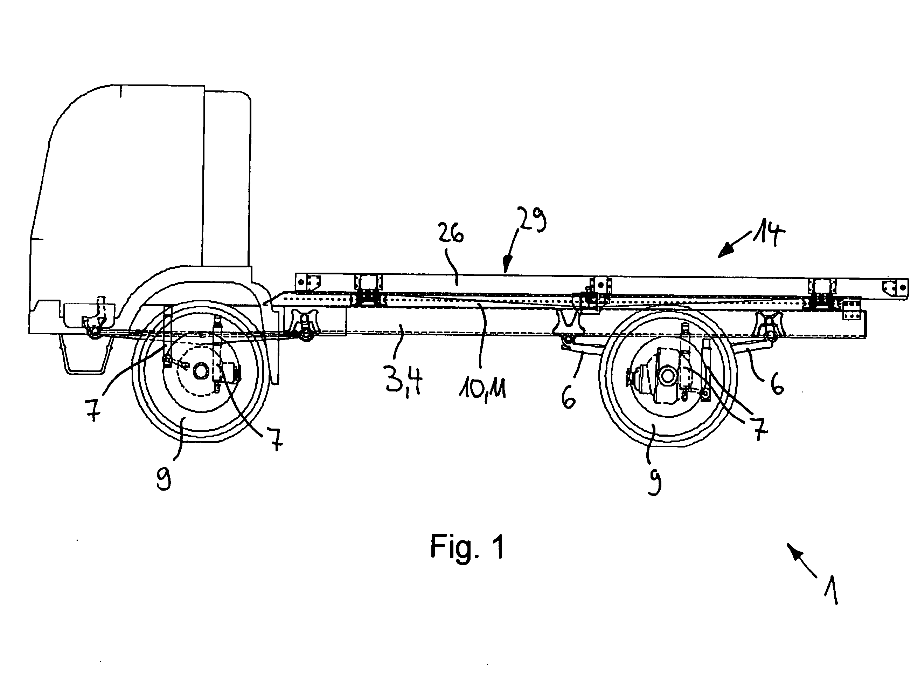

Ein in Fig. 1 im Ganzen mit 1 bezeichnetes Lastfahrzeug weist einen biegesteifen und um die Fahrzeuglängsmittelachse 2 verwindungsweichen Fahrgestellrahmen 3 auf Der Fahrgestellrahmen 3 hat zwei in Fahrzeuglängsrichtung verlaufende, beidseits der Fahrzeuglängsmittelachse 2 angeordnete, seitlich voneinander beabstandete Längsprofile 4. Die Längsprofile 4 können beispielsweise einen C-förmigen Querschnitt aufweisen. An einem vorderen und einem hinteren Bereichen der Längsprofile 4 sind diese jeweils durch ein Querprofil 5 miteinander verbunden. Der Fahrgestellrahmen 3 ist in an sich bekannter Weise über Fahrwerksfedern 6 und Stoßdämpfer 7 mit Achsen 8 verbunden, an denen Räder 9 angeordnet sind.

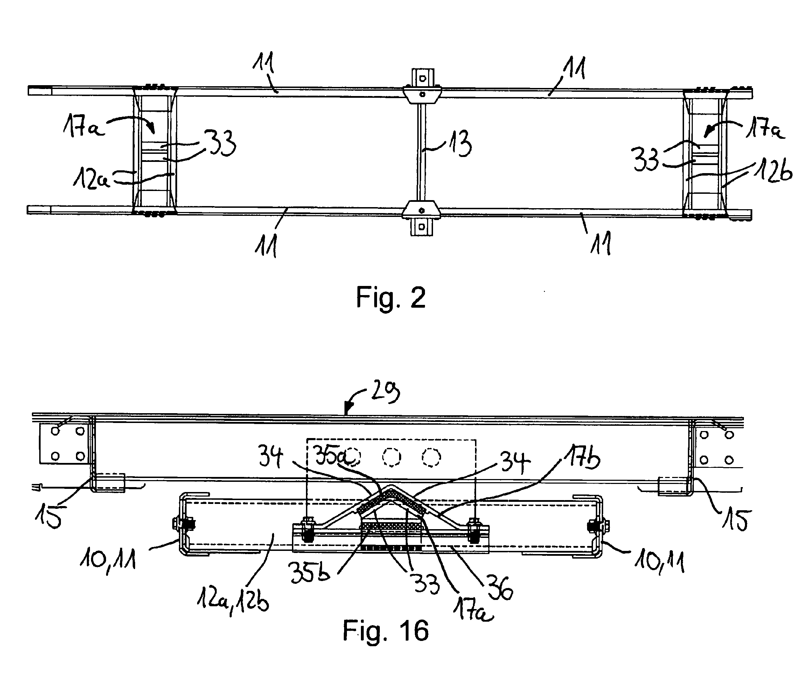

Auf dem Fahrgestellrahmen 3 ist ein verwindungsweicher Hilfsrahmen 10 angeordnet. In Fig. 2 ist erkennbar, dass der Hilfsrahmen 10 zwei Hilfsahmenlängsprofile 11 aufweist, die an ihren vorderen Endbereichen über ein vorderes Querprofilteil 12a und an ihrem hinteren Endbereich über ein hinteres Querprofilteil 12b miteinander verbunden sind. Etwa mittig zwischen den Querprofilteil 12a, 12b ist außerdem ein weiteres Querprofilteil 13 angeordnet, das die Hilfsrahmenlängsprofile 11 miteinander verbindet.

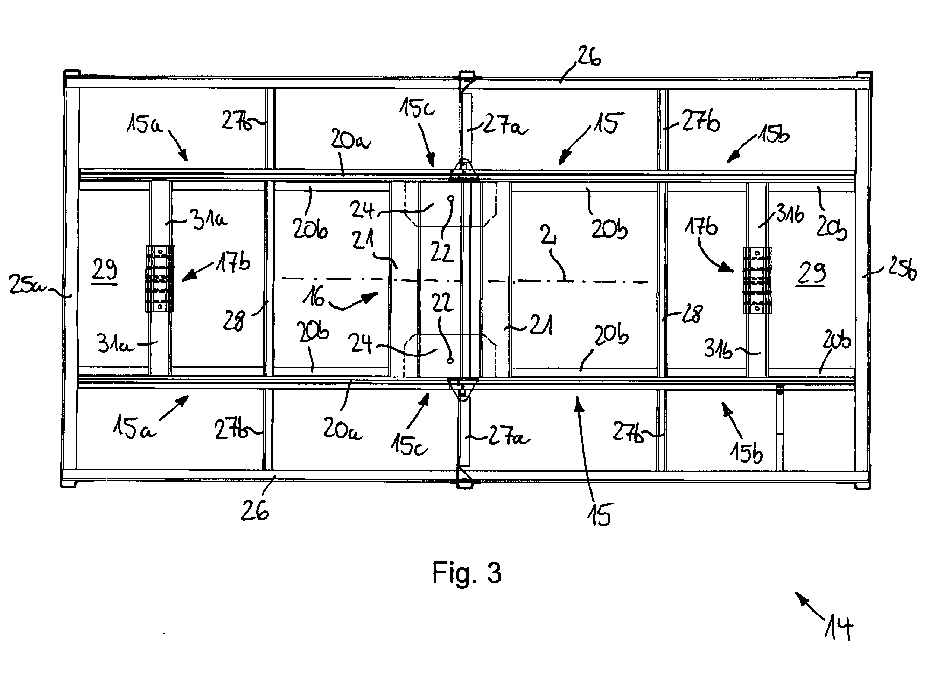

Über dem Hilfsrahmen 10 ist ein eine Pritsche oder dergleichen im Wesentlichen ebene Ladefläche aufweisender, in Fig. 3 näher dargestellter Aufbau 14 angeordnet. Der Aufbau 14 hat zwei, quer zur Fahrzeuglängsrichtung voneinander beabstandete Längsträger 15, die durch einen zwischen diesen angeordneten Querträger 16 miteinander verbunden sind.

Der Aufbau 14 ist an vier Stellen über Bewegungslager mit dem Hilfsrahmen 10 verbunden. Zwei der Bewegungslager sind als Schwenklager 17 ausgebildet, deren Schwenkachsen etwa in der Fahrzeuglängsmittelachse 2 verlaufen. Zwei weitere Bewegungslager sind als Auflager 18 ausgestaltet, die seitlich beidseits der Fahrzeuglängsmittelachse 2 mit Abstand zu dieser angeordnet sind. In Fahrzeuglängsrichtung sind die Auflager 18 etwa mittig zwischen den Schwenklagern 17 vorgesehen.

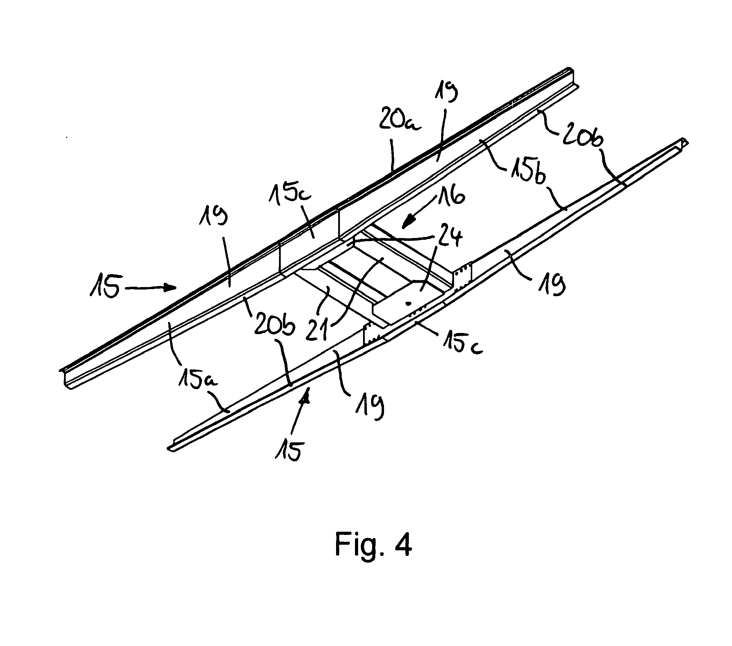

In Fig. 4 ist erkennbar, dass die Längsträger 15 als offene Profile mit etwa Z-förmigem Querschnitt ausgestaltet sind. Jeder Längsträger 15 hat jeweils einen Längssteg 19, der in einer Vertikalebene angeordnet ist, die sich in Fahrzeuglängs-richtung erstreckt. Beidseits des Längsstegs 19 ist jeweils ein Schenkelteil 20 mit dem Längssteg 19 verbunden. Ein oberes Schenkelteile 20a jedes Längsträgers 15 ist an der dem jeweils anderen Längsträger 15 zugewandten Innenseite des Längsstegs 19 und ein unteres Schenkelteil 20b an der Außenseite des Längsstegs 19 angeordnet. Die Ebenen, in denen die Schenkelteile 20b angeordnet sind, verlaufen etwa rechtwinklig zu den Ebenen der Längsstege 19.

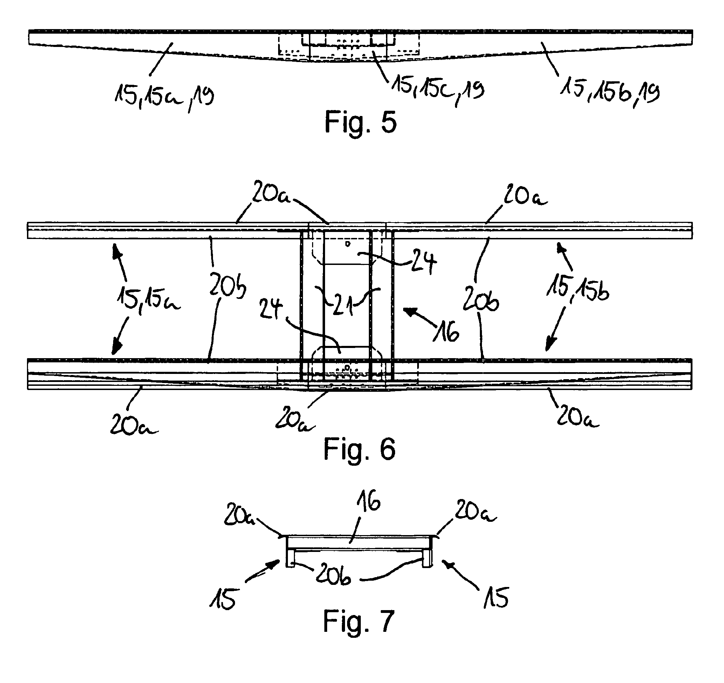

In Fig. 4 und 5 ist erkennbar, dass die Höhe des Längsstegs 19, jeweils ausgehend vom Querträger 16 zum vorderen bzw. hinteren Ende des Längsträgers 15 hin abnimmt. Die oberen Schenkelteile 20a sind in einer gemeinsamen, etwa parallel zu der Ladefläche verlaufenden Ebene angeordnet. Die unteren Schenkelteile 20b verlaufen jeweils in einem zwischen dem hinteren Ende des Längsträgers 15 und dem Querträger 16 befindlichen Abschnitt des Längsträgers 15 sowie in einem zwischen dem Querträger 16 und dem vorderen Ende des Längsträgers 15 befindlichen Abschnitt des Längsträgers 15 schräg zu der Ebene der Ladefläche.

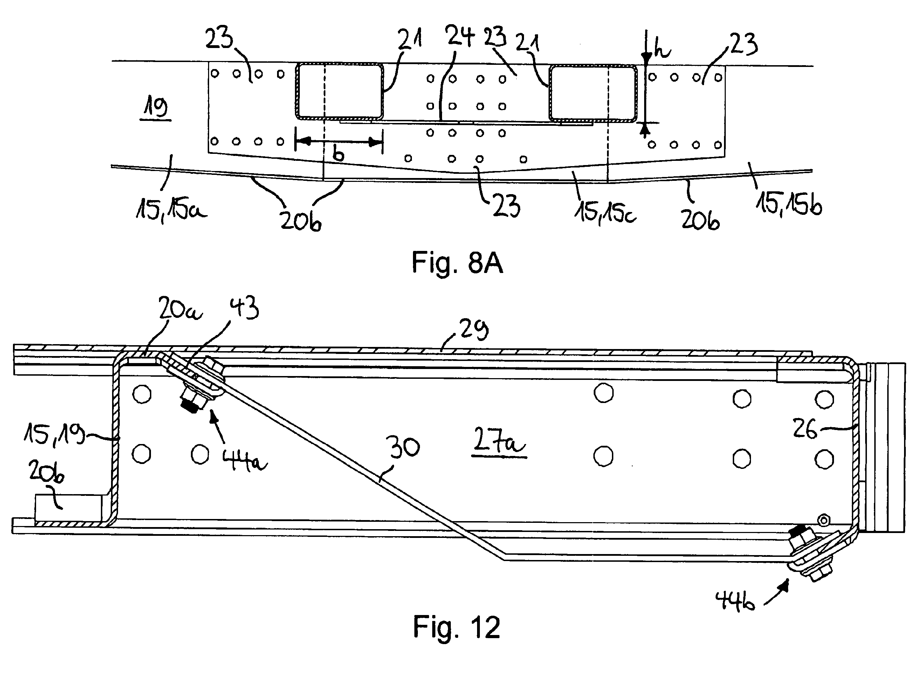

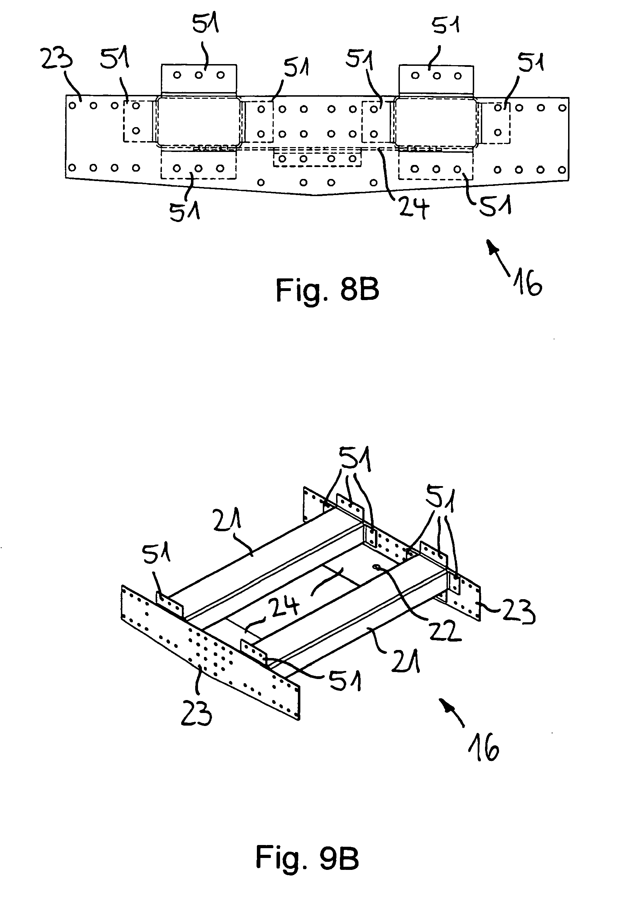

In Fig. 4 bis 6 und in Fig. 8 ist erkennbar, dass der Querträger 16 als torsionssteifes Hohlprofil ausgestaltet ist, der zwei parallel zueinander angeordnete, quer zur Fahrzeuglängsrichtung verlaufende Hohlprofilteile 21 aufweist, die in Fahrzeuglängsrichtung zueinander beabstandet sind. Die Hohlprofilteile 21 haben jeweils einen etwa rechteckigen Querschnitt.

In Fig. 8 ist erkennbar, dass die Hohlprofilteile 21 mit ihrer größeren Querschnittsabmessung b in Längserstreckungsrichtung der Längsträger 15 angeordnet sind. Außerdem ist erkennbar, dass die Höhe h der Hohlprofilteile 21 kleiner ist als die Höhe der Längsträger 15. In vertikaler Richtung sind die Hohlprofilteile 21 außermittig zu den Längsträgern 15 in Richtung zu den oberen Schenkelteilen 20a versetzt angeordnet. Dabei ist die obere Wand der Hohlprofilteile 21 jeweils etwa in gerader Verlängerung zu den oberen Schenkelteilen 20a angeordnet. Die Höhe h der Hohlprofilteile 21 entspricht etwa der Hölfte der Höhe der Längsstege 19.

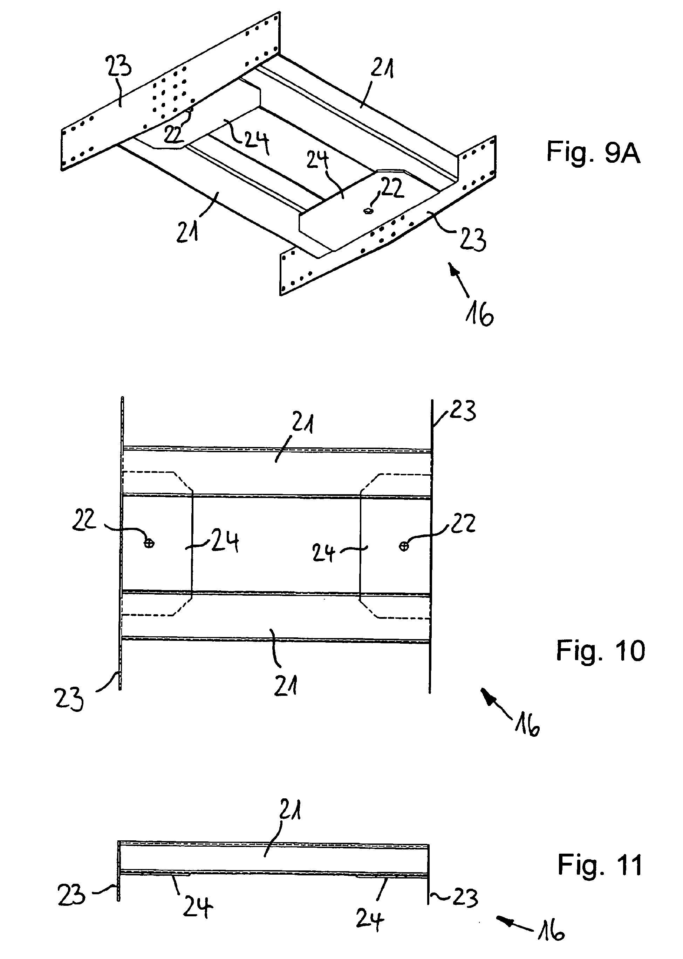

Die Hohlprofilteile 21 sind zwischen zwei etwa parallel zueinander verlaufenden Flanschplatten 23 angeordnet, die quer zur Längserstreckungsrichtung der Hohlprofilteile 21 angeordnet sind. Die Flanschplatten 23 sind mit den stirnseitigen Enden der Hohlprofilteile 21 torsionssteif verbunden. Bei dem in den Fig. 8A und 9A gezeigten Ausführungsbeispiel sind die Flanschplatten 23 mit den stirnseitigen Enden der Hohlprofilteile 21 verschweißt. Bei Ausführungsbeispiel gemäß Fig. 8B und 9B sind an die Enden der Hohlprofilteile 21 Laschen 51 einstückig angeformt, die in einer rechtwinklig zur Längserstreckung der Hohlprofilteile 21 verlaufenden Ebene angeordnet sind und jeweils mit der ihr zugeordneten Flanschplatte 23 und/oder dem Längsträger 15 über Schrauben verbunden sind. In Fig. 9-11 ist erkennbar, dass benachbart zu den Flanschplatten 23 Versteifüngsplatten 24 auf die Hohlprofilteile 21 aufgebracht sind, die die mit ihrer Plattenebene etwa horizontal angeordnet sind und einen zwischen den Hohlprofilteilen 21 gebildeten Zwischenraum überbrücken. Die Versteifungsplatten 24 sind mit den Hohlprofilteilen 21 und den Flanschplatten 23 verschweißt. Bei dem Ausführungsbeispiel gemäß Fig. 9 sind die Versteifungsplatten 24 an der Unterseite der Hohlprofilteile 21 angeordnet. In jeder Versteifungsplatte 24 ist jeweils zwischen den Hohlprofilteilen 21 eine Lochung 22 für den Durchtritt einer Schraube vorgesehen.

Die Flanschplatten 23 liegen mit ihren den Hohlprofilteilen 21 abgewandten Außenflächen plan an den einander zugewandten Innenflächen der Längsstege 19 der Längsträger 15 an. In Fig. 8 und 9 ist erkennbar, dass die Flanschplatten 23 und die Längsträger 15 eine Anzahl von Lochungen aufweisen, die von Schrauben durchsetzt sind, über weiche die Längsträger 15 fest mit dem Querträger 16 verbunden sind. Die Schrauben sind bevorzugt mit Muttern verschraubt, die ggf. als Hutmuttern ausgestaltet sein können. Es ist aber auch möglich, dass die in den Flanschplatten 23 und/oder in den Längsträgern 15 vorgesehenen Lochungen mit Innengewinden versehen sind, die mit Gewindeabschnitten der Schrauben verschraubt-sind.

In Fig. 4 und 8 ist erkennbar, dass die Längsträger 15 ein vorderes Trägerteil 15a, ein hinteres Trägerteil 15b und ein zwischen diesen angeordnetes Zwischenstück 15c aufweisen. Die Trägerteile 15a, 15b und das Zwischenstück 15c sind jeweils in gerader Verlängerung zueinander angeordnet.

Die Flanschplatten 23 überbrücken jeweils das Zwischenstück 15c und sind mit einem vorderen Plattenabschnitt mit Hilfen von mehreren Schrauben mit dem vorderen Trägerteil 15a und mit einem hinteren Plattenabschnitt mit Hilfen von mehreren Schrauben mit dem hinteren Trägerteil 15b verschraubt. zusätzlich ist ein zwischen diesen Plattenabschnitten befindlicher weiterer Plattenabschnitt mit Hilfen von mehreren Schrauben mit dem Zwischenstück 15c verschraubt.

In Fig. 8 ist erkennbar, dass das Zwischenstück 15c mit seinem vorderen Stirnende direkt an das hintere Stirnende des vorderen Trägerteils 1 5a angrenzt. In entsprechender Weise grenzt das hintere Stirnende des Zwischenstücks direkt an das vordere Stirnende des hinteren Trägerteils 15b an.

Wie in Fig. 3 deutlich erkennbar ist, weist der Aufbau 14 einen Außenrahmen mit einem vorderen Rahmenquerstück 25a, einem hinteren Rahmenquerstück 25b sowie zwei diese miteinander verbindenden Rahmenlängsstücken 26 auf Das vordere Rahmenquerstück 25a und das hintere Rahmenquerstück 25b weisen Verbindungsstellen auf, die mit Hilfe von in der Zeichnung nicht näher dargestellten Schrauben mit den Enden der Längsträger 15 verbunden sind.

Zwischen dem vorderen Rahmenquerstück 25a und dem hinteren Rahmenquerstück 25b sind mehrere Unterstützungsprofile 27a, 27b für ein auf den Längsträgern 15 befindliches Bodenteil 29 angeordnet. Das Bodenteil 29 kann beispielsweise aus Metallplatte, Kunststoffplatten, Holzplatten, Latten oder dergleichen zusammengesetzt sein. Die Unterstützungsprofile 27a, 27b verlaufen etwa parallel zu den Rahmenquerstücken 25a, 25b. In gerader Verlängerung der Unterstützungsprofile 27a, 27b sind zwischen den Längsträgern 15 zusätzliche Unterstützungselemente 28 angeordnet, die jeweils an ihrem einen Ende mit dem einen und an ihrem anderen Ende mit dem anderen Längsträger 15 verbunden sind.

Wie in Fig. 12 erkennbar ist, ist jeweils ein erster Endbereich jedes Unterstützungsprofils 27a, 27b mit einem Längsträger 15 und ein zweiter Endbereich jedes Unterstützungsprofils 27a, 27b mit einem Rahmenlängsstück 26 des Außenrahmens verbunden. Zusätzlich sind die Rahmenlängsstücke 26 über Querstreben 30 mit den Längsträgern 15 verschraubt. Die Querstreben 30 verlaufen von den oberen Schenkelteilen 20a der Längsträger 15 zu einem unteren Endbereich des Rahmenlängsstücks 26. Letzterer ist in einer geringeren Höhe angeordnet als das obere Schenkelteil 20a. An den dem Längssteg 19 abgewandten Randbereich des oberen Schenkelteils 20a des Längsträgers 15 ist eine Haltelasche oder ein Haltesteg 43 angeformt, der mit seiner Erstreckungsebene derart gegenüber der Ebene des auf dem Schenkelteil 20a aufliegenden Bodenteils 29 geneigt ist, dass zwischen dem von dem Schenkelteil 20a entfernten Rand des Haltestegs 43 und dem Bodenteil 29 ein Freiraum gebildet ist.

An einem zu dem Haltesteg 43 benachbarten ersten Endbereich weist die Querstrebe 30 eine erste Klemme 44a auf, zwischen deren Klemmschenkel der Haltesteg 43 eingespannt ist. Die erst Klemme 44a hat einen ersten, an der Oberseite des Haltestegs 43 anliegenden Klemmschenkel und einen relativ dazu im Abstand verstellbaren zweiten Klemmschenkel, der an der Unterseite des Haltestegs 43 anliegt. Die Klemmschenkel werden von einer Klemmschraube durchsetzt, deren Schraubenkopf bereichsweise in den zwischen dem Haltesteg 43 und dem Bodenteil 29 gebildeten Freiraum eingreift.

An einem zu dem Rahmenlängsstück 26 benachbarten zweiten Endbereich weist die Querstrebe 30 eine zweite Klemme 44b auf, zwischen deren Klemmschenkel in entsprechender Weise ein Randbereich des Rahmenlängsstücks 26. eingespannt ist. Mit der Querstrebe 30 kann ein in der Zeichnung nicht näher dargestelltes Zubehörteil, wie z.B. eine Werkzeugkiste, ein Unterlegkeilhalter und/oder ein Schaufelhalter verbunden sein.

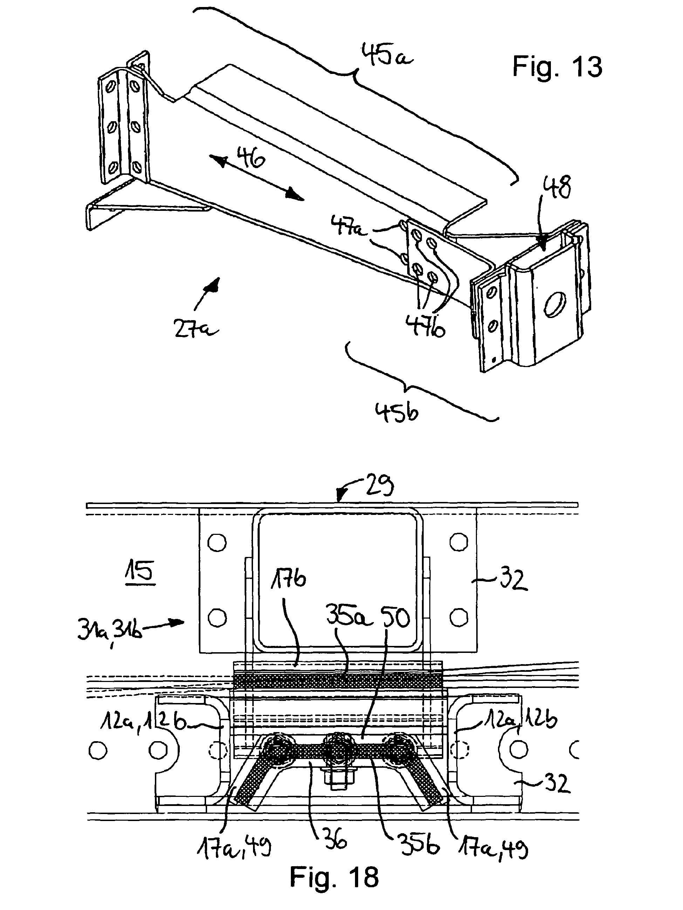

In Fig. 13 ist erkennbar, dass die Unterstützungsprofile 27a jeweils einen ersten, mit dem Längsträger 15 verbundenen Abschnitt 45a und einen zweiten, mit dem Rahmenlängsstück 26 verbundenen Abschnitt 45b aufweisen. Deutlich ist erkennbar, dass die Abschnitte 45a, 45b in Erstreckungsrichtung 46 des Unterstützungsprofils 27a zueinander versetzt angeordnet sind und sich bereichsweise überdecken.

Jeder Abschnitt 45a, 45b hat jeweils mehrere Lochungen 47a, 47b für den Durchtritt von Schrauben auf Die Lochungen 47a, 47b derart angeordnet sind, dass in mindestens zwei in Erstreckungsrichtung 46 des Unterstützungsprofils 27a zueinander versetzten Relativpositionen der Abschnitte 45a, 45b jeweils mindestens zwei Lochungen 47a des ersten Abschnitts 45a mit mindestens zwei Lochungen 47b des zweiten Abschnitts 45b fluchten. Somit kann bei der Montage des Aufbaus die Breite des Aufbaus variiert werden, je nach dem, in welche Lochungen 47a, 47b die Schrauben eingesetzt werden. Erwähnt werden soll noch, dass an dem mit dem Rahmenlängsstück 26 verbundenen zweiten Abschnitt 45b eine Rungentasche 48 angeordnet ist.

In den Fig. 3, 14, 15 ist erkennbar, dass zwischen den Längsträgern 15 zwei Quertraversen 31 a, 31 b angeordnet sind, die jeweils ein Kastenprofilteil aufweisen, das parallel zu den Hohlprofilteilen 21 des Querträgers 16 verläuft und an seinen Stirnenden jeweils mit einem Befestigungsflansch 32 verbunden ist. Einer der Befestigungsflansche 32 ist mit dem Längssteg 19 des einen Längsträgers 15 und der andere Befestigungsflansch 32 ist mit dem Längssteg 19 des anderen Längsträgers 15 verschraubt.

Die Schwenklager 17 haben jeweils ein erstes Lagerteil 17a und ein verschwenkbar damit verbundenes zweites Lagerteil 17b. Das erste Lagerteil 17a des vorderen Schwenklagers 17 ist etwa mittig am vorderen Querprofilteil 12a des Hilfsrahmens 10 und das erste Lagerteil 17a des hinteren Schwenklagers 17 ist etwa mittig am hinteren Querprofilteil 12b des Hilfsrahmens 10 angeordnet. Das zweite Lagerteil 17b des vorderen Schwenklagers 17 ist etwa mittig an der vorderen Quertraverse 31 a und das zweite Lagerteil 17b des hinteren Schwenklagers 17 ist etwa mittig an der hinteren Quertraverse 31b angeordnet.

In Fig. 16 ist erkennbar, dass das erste Lagerteil 17a einen Vorsprung hat, der zwei im Wesentlichen parallel zur Fahrzeuglängsmittelachse 2 verlaufende, etwa V-förmig angeordnete erste Wandungen 33 aufweist. Diese schließen einen Winkel von etwa 120° zwischen sich ein. Das zweite Lagerteil 17b hat eine zu dem Vorsprung passende Vertiefung, die zwei etwa parallel zu den ersten Wandungen 33 angeordnete zweite Wandungen 34 aufweist. Zwischen den ersten Wandungen 33 und den zweiten Wandungen 34 ist eine erste Elastomerwerkstoffschicht 35a angeordnet, welche die Lagerteile flächig miteinander verbindet. Die erste Elastomerwerkstoffschicht 35a besteht bevorzugt aus Gummi, der auf die zweiten Wandungen 24 aufvulkanisiert ist.

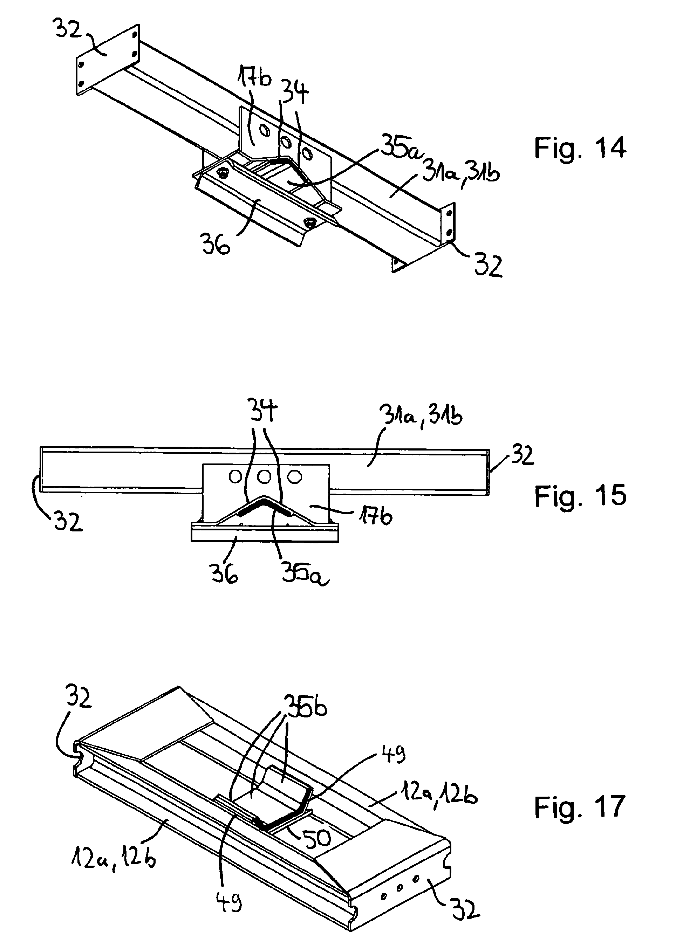

In Fig. 14 ist erkennbar, dass unter dem zweiten Lagerteil 17b eine die V-förmige Vertiefung überbrückende Brücke 36 vorgesehen ist, die parallel zu den Querprofilteilen 12a, 12b verläuft und beidseits der Vertiefung mit Hilfe von Schrauben mit dem zweiten Lagerteil 17b verbunden ist. Die Brücke 36 ist von der ersten Elastomerwerkstoffschicht 35a beabstandet und untergreift den Vorsprung des ersten Lagerteils 17a. Dieser wird also formschlüssig von dem zweiten Lagerteil 17b und der Brücke 36 umschlossen.

An seiner Unterseite weist das erste Lagerteil 17a dritte Wandungen 49 auf, die schräg zueinander angeordnet sind und jeweils etwa parallel zur Längserstreckungsrichtung der Querprofilteile 12a, 12b des Hilfsrahmens 10 verlaufen. Die dritten Wandungen 49 sind durch eine im Wesentlichen parallel zur Erstreckungsebene des Hilfsrahmens 10 angeordnete vierte Wandung 50 miteinander und mit den Querprofilteilen 12a, 12b verbunden. Ausgehend von der vierten Wandung 50 nach unten, nimmt die lichte Weite zwischen den dritten Wandungen 49 zu.

Die dritten Wandungen und die vierte Wandung sind mit einer zweiten Elastomerschicht 35b beschichtet, die mit ihrer Unterseite flächig an der Brücke 36 anliegt. Dabei kommen Seitenflächen der Brücke 36 flächig an den auf den dritten Wandungen 49 befindlichen Teilbereichen der zweiten Elastomerschicht 35b und eine Bodenfläche der Brücke 36 kommt flächig an dem auf der vierten Wandung 50 befindlichen Teilbereich der zweiten Elastomerschicht 35b zur Anlage. Die Lagerteile 17a, 17b werden von einer Schraube zusammengehalten, welche die Lagerteile 17a, 17b, die Elastomerschichten 35a, 35b und die Brücke 36 durchsetzt (Fig. 18).

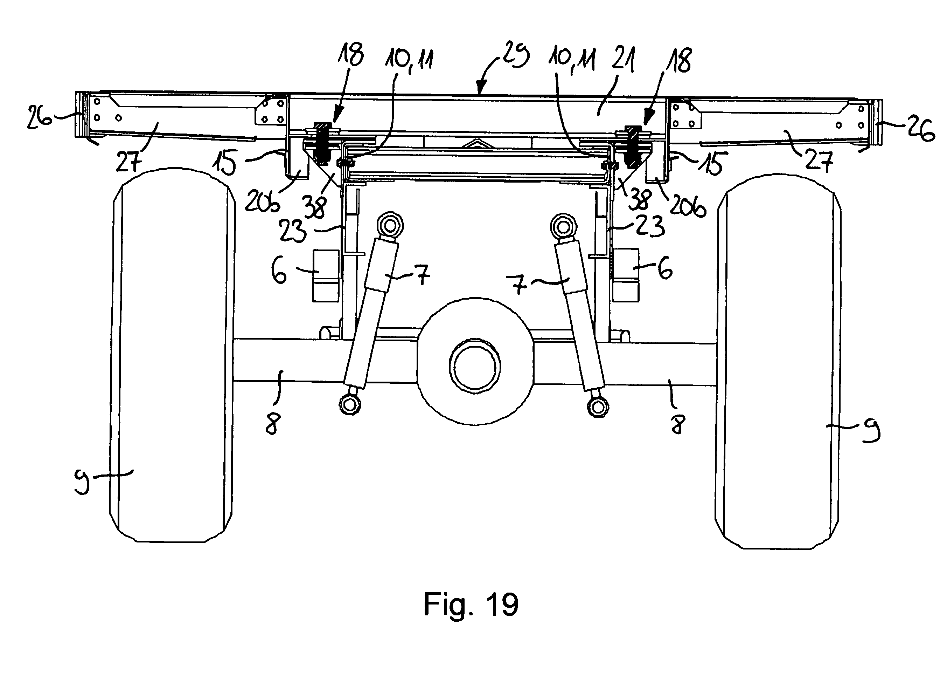

In Fig. 19-21 ist erkennbar, dass die Auflager 18 jeweils ein außenseitig am Hilfsrahmenlängsprofil 11 angeschraubtes Lagerunterteil 38 aufweisen, das mit der als Lageroberteil dienenden Versteifungsplatte 24 zusammenwirkt. Zwischen einer im Wesentlichen ebenen Auflagefläche des Lagerunterteils 38 und der Unterseite der Versteifungsplatte 24 ist eine erste Elastomerschicht 39a angeordnet. Auf der Versteifungsplatte 24 ist eine zweite Elastomerschicht 39b und auf dieser eine erste Unterlegscheibe 40a angeordnet. Unter dem Lagerunterteil 38 ist eine dritte Elastomerschicht 39c und unter dieser eine zweite Unterlegscheibe 40b angeordnet. Die aus den Elastomerschichten 39a, 39b, 39c, den Unterlegscheiben 40a, 40b, dem Lagerunterteil 38 und der Versteifungsplatte 24 gebildete Lageranordnung wird von einer Lagerschraube 41 durchsetzt, die mit einer Schraubenmutter 42 verschraubt ist. Die Lageranordnung ist zwischen dem Kopf der Lagerschraube 41 und der Schraubenmutter 42 eingespannt.

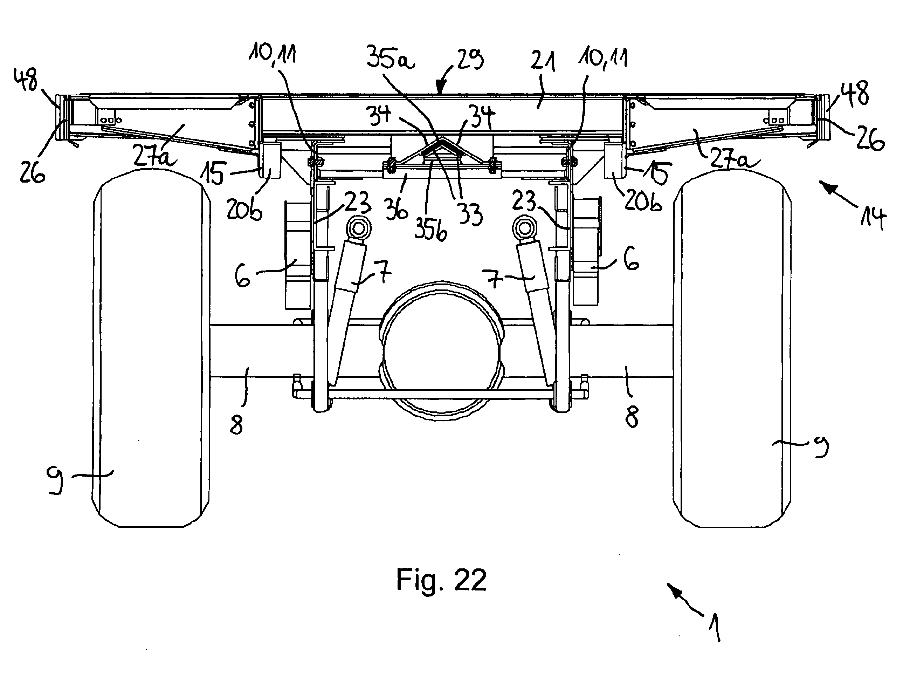

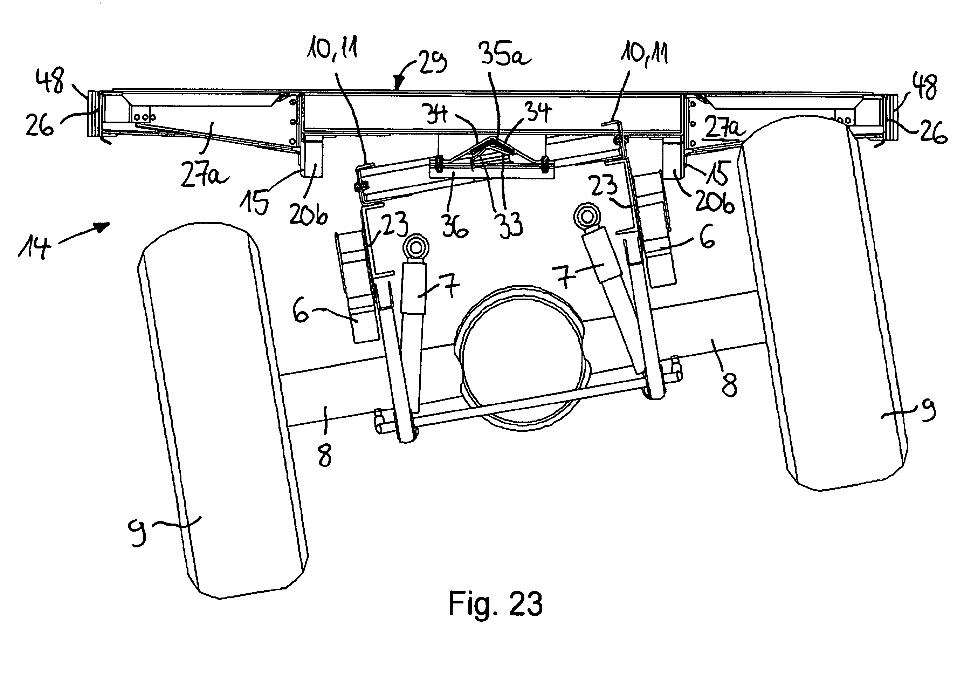

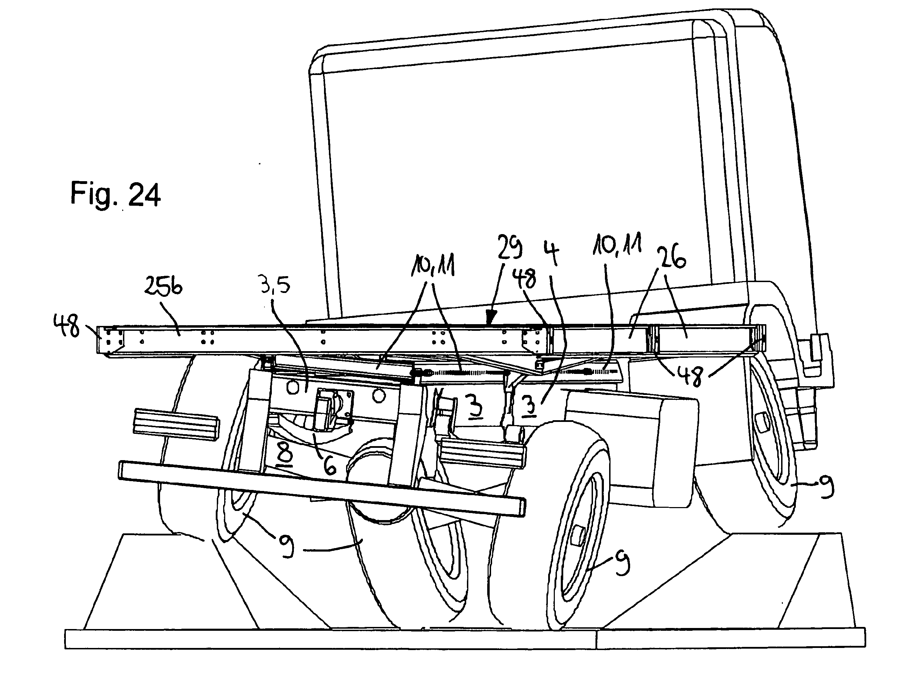

In Fig. 22 und 23 ist erkennbar, dass zwischen den Längsträgern 15 ein Bewegungsfreiraum gebildet ist, die beim Überfahren von Bodenunebenheiten den Hilfsrahmen 10 und ggf. die Fahrwerksfedern 6 bereichsweise aufnimmt. Trotz der dabei auf den Fahrgestellrahmen 3 einwirkenden Torsionskräfte bleibt die Ladefläche des Bodenteils 29 im Wesentlichen eben (Fig. 24).

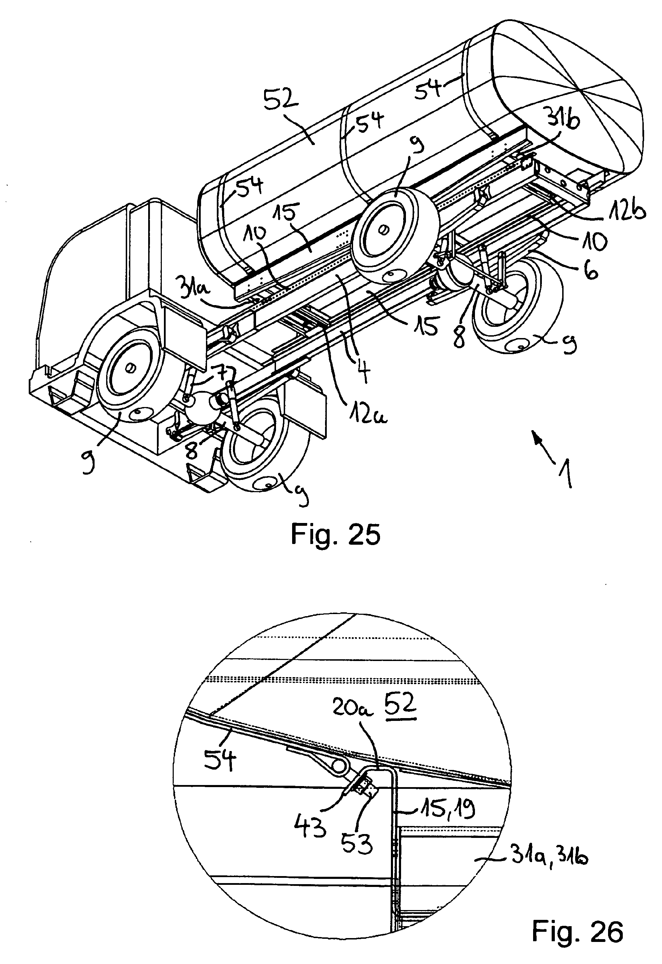

Bei dem in Fig. 25 gezeigten Ausführungsbeispiel ist das Lastfahrzeug 1 als Tankfahrzeug ausgebildet, das auf den Längsträgern 15 einen Tank 52 aufweist, in den eine zu transportierende Flüssigkeit einfüllbar ist. Deutlich ist erkennbar, dass der Tank eine größere Breite aufweist als das Abstandsmaß zwischen den einander abgewandten längsseitigen Außenrändern der Längsträger 15. Außerdem ist erkennbar, dass die äußere Mantelfläche des Tanks konvex gekrümmt ist.

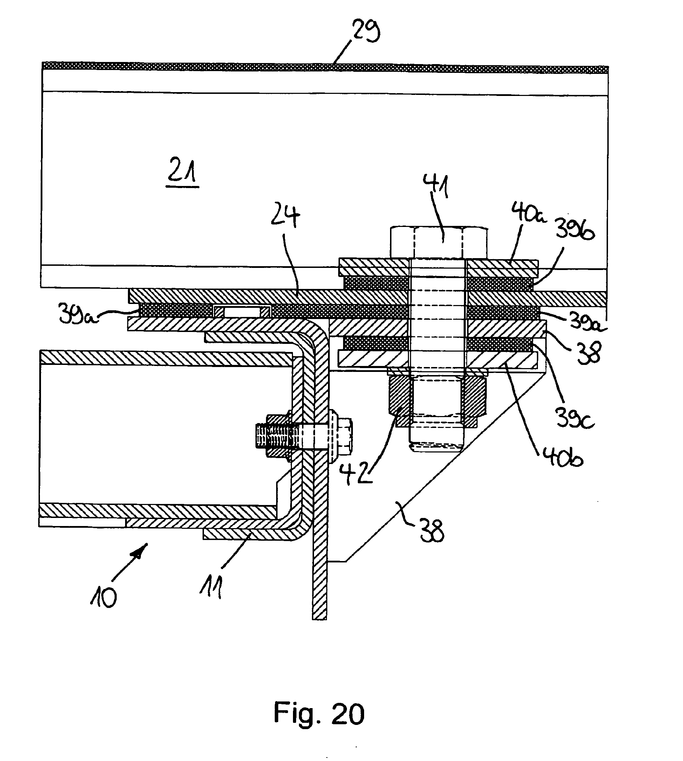

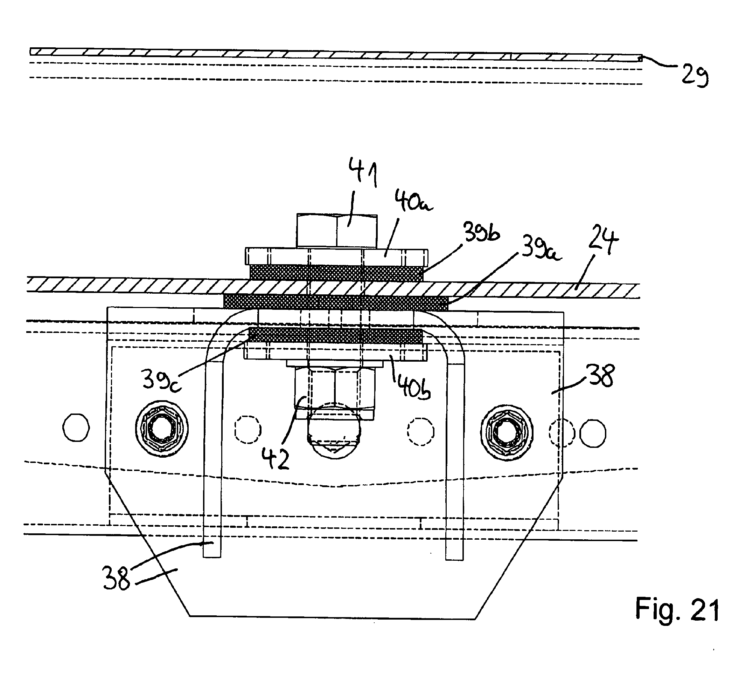

Die Längsträger 15 sind wie bei dem in Fig. 4 gezeigten Ausführungsbeispiel als offene Profile mit etwa Z-förmigem Querschnitt ausgestaltet. Insoweit wird auf die dortige Beschreibung verwiesen. Die Längsträger 15 sind in Fahrzeuglängsrichtung etwa mittig durch den in Fig. 9A abgebildeten Querträger 16 verbunden. An ihren vorderen und hinteren Endbereichen sind die Längsträger außerdem über die in Fig. 14 dargestellten Quertraversen 31 a, 31 b miteinander verbunden. Die Quertraversen 31 a, 31 b sind jeweils über Schwenklager 17 mit den Querprofilteilen 12a, 12b (Fig. 2, 17) des Hilfsrahmens 10 verbunden. Zwischen den Schwenklagern 17 sind seitlich beidseits der Fahrzeuglängsmittelachse 2 die in Fig. 20 und 21 dargestellten Auflager 18 angeordnet, die den Querträger 16 auf dem Hilfsrahmen 10 abstützen.

Wie in Fig. 26 besonders gut erkennbar ist, liegt der Tank 52 mit seiner Unterseite auf den oberen Schenkelteilen 20a der Längsträger 15 jeweils zumindest linienförmig auf An den dem Längssteg 19 abgewandten Randbereich des oberen Schenkelteils 20a jedes Längsträgers 15 ist jeweils eine nach außen weisende Haltelasche oder ein nach außen weisender Haltesteg 43 angeformt, der mit seiner Erstreckungsebene quer zu einem darüber befindlichen Wandungsbereich des Tanks 52 angeordnet ist. Der Haltesteg 43 hat Lochungen, die jeweils von einer Spannschraube 53 durchsetzt werden. Jede Spannschraube 53 ist mit einem Halteband 54 verbunden, das quer zur Fahrzeuglängsrichtung außen um den Tank 52 herumgeführt ist und an seinem von der Spannschraube 53 entfernten Ende über eine weitere Spannschraube 53 mit dem anderen Längsträger 15 des Lastfahrzeugs 1 verbunden ist. Der andere Längsträger 15 weist zu diesem Zweck einen entsprechenden, mit Lochungen für den Durchtritt der Spannschrauben versehenen Haltesteg 43 auf In Fig. 25 ist erkennbar, dass zum Befestigen des Tanks 51 an den Längsträgern 15 mehrere Haltebänder 54 vorgesehen sind, die in Fahrzeuglängsrichtung voneinander beabstandet sind.

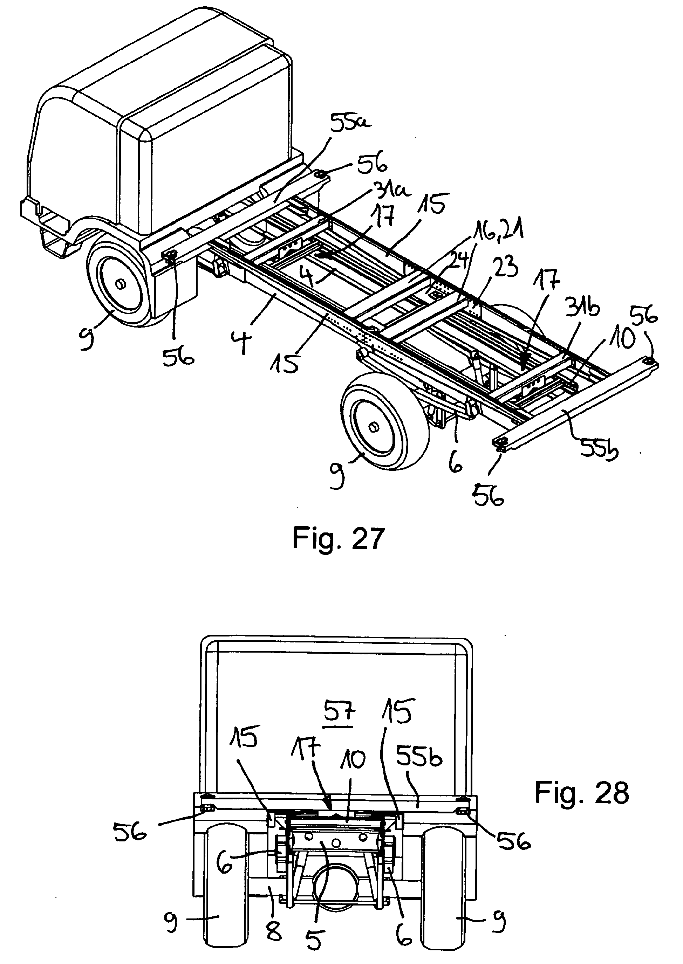

Bei dem in Fig. 27 und 28 gezeigten Ausführungsbeispiel sind die vorderen und hinteren Endbereiche der Längsträger 15 jeweils durch ein Querprofilelement 55a, 55b verbunden. Die Querprofilelement 55a, 55b verlaufen etwa rechtwinklig zur Fahrzeuglängsmittelachse 2 und stehen seitlich über die Längsträger 15 zur Fahrzeugaußenseite hin über. An ihren über die Längsträger 15 überstehenden Endbereichen weisen die Querprofilelemente 55a Befestigungselemente 56 zum Lösbaren Verbinden mit einem Container 57 auf

Erwähnt werden soll noch, dass bei den beschriebenen Ausführungsbeispielen anstelle der Schrauben auch Nieten und/oder Schließringbolzen als Verbindungselemente vorgesehen sein können.

## Patentansprüche

1. Lastfahrzeug (1) mit einem biegesteifen, aber verwindungsweichen Fahrgestellrahmen (3), auf dem ein biege- und verwindungssteifer Aufbau (14) angeordnet ist, der mindestens zwei, quer zur Fahrzeuglängsrichtung voneinander beabstandete Längsträger (15) aufweist, die durch wenigstens einen zwischen diesen angeordneten Querträger (16) miteinander verbunden sind, wobei der Aufbau (14) an zumindest drei Stellen über Bewegungslager direkt oder indirekt über einen Hilfsrahmen (10) mit dem Fahrgestellrahmen (3) verbunden ist, wobei wenigstens eines der Bewegungslager als Schwenklager (17) ausgebildet ist, dessen Schwenkachse etwa in der Fahrzeuglängsmittelachse (2) verläuft, und wobei wenigstens zwei Bewegungslager als Auflager (18) ausgebildet sind, die seitlich beidseits der Schwenkachse angeordnet und in Fahrzeuglängsrichtung von dem Schwenklager (17) beabstandet sind, **dadurch gekennzeichnet, dass** die Längsträger (15) jeweils als offenes Profil und der mindestens eine Querträger (16) als torsionssteifes Hohlprofil ausgestaltet sind, dass am Querträger (16) für jeden Längsträger (15) jeweils mindestens ein dem betreffenden Längsträger (15) zugewandter Verbindungsflansch angeordnet ist, und dass die Verbindungsflansche mit Hilfe von Schrauben, Nieten und/oder Schließringbolzen mit den Längsträgern (15) verbunden sind.

2. Lastfohrzeug (1) nach Anspruch 1, **dadurch gekennzeichnet, dass** die Stirnenden des Hohlprofils (16) mit den Verbindungsflanschen verschweißt sind.

3. Lastfahrzeug (1) nach Anspruch 1 oder 2, **dadurch gekennzeichnet, dass** die den einzelnen Längsträgern (15) zugewandten Verbindungsflansche als Flanschplatten (23) ausgestaltet sind, die durch mindestens ein Hohlprofilteil (21) torsionssteif miteinander verbunden sind, und dass die Flanschplatten (23) quer zur Längserstreckung des mindestens einen Hohlprofilteils (21) seitlich über dieses überstehen und Lochungen für den Durchtritt der Schrauben und/oder Nieten aufweisen.

4. Lastfahrzeug (1) nach Anspruch 3, **dadurch gekennzeichnet, dass** die Flanschplatten (23) durch mindestens zwei in Richtung der Fahrzeuglängsmittelachse zueinander beabstandete Hohlprofilteile (21) torsionssteif miteinander verbunden sind.

5. Lostfahrzeug (1) nach einem der Ansprüche 1 bis 4, **dadurch gekennzeichnet, dass** das mindestens eine Hohlprofil (16) ein kreiszylindrisches Hohlprofil und/oder ein vorzugsweise als Rechteckprofil ausgestaltetes Kastenprofil umfasst.

6. Lastfahrzeug (1) nach einem der Ansprüche 1 bis 5, **dadurch gekennzeichnet, dass** die Längsträger (15) als Z-Profile ausgestaltet sind, die jeweils zwei durch einen Längssteg (19) miteinander verbundene Schenkelteile (20a, 20b) aufweisen, und dass die Schrauben und/oder Nieten vorzugsweise die Längsstege (19) und die Verbindungsflansche durchsetzen.

7. Lastfahrzeug (1) nach einem der Ansprüche 1 bis 6, **dadurch gekennzeichnet, dass** die Längsträger (15) zumindest ein vorderes Trägerteil (15a), ein hinteres Trägerteil (15b) und ein zwischen diesen angeordnetes Zwischenstück (15c) aufweisen, dass die Trägerteile (15a, 15b) und das Zwischenstück (15c) in gerader Verlängerung zueinander angeordnet sind, dass die den Längsträgern (15) zugewandten Verbindungsflansche jeweils das Zwischenstück des (15c) betreffenden Längsträgers (15) überbrücken, und dass die Trägerteile (15a, 15b) und das Zwischenstück (15c) jeweils mit Hilfe von Schrauben und/oder Nieten mit dem ihnen zugewandten Verbindungsflansch verbunden sind.

8. Lastfahrzeug (1) nach einem der Ansprüche 1 bis 7, **dadurch gekennzeichnet, dass** der Aufbau (14) einen Außenrahmen mit einem vorderen Rahmenquerstück (25a) und einem hinteren Rahmenquerstück (25b) sowie zwei diese miteinander verbindenden Rahmenlängsstücken (26) aufweist, und dass das vordere Rahmenquerstück (25a) und das hintere Rahmenquerstück (25b) Verbindungsstellen aufweisen, die mit Hilfe von Schrauben und/oder Nieten mit den Längsträgern (15) verbunden sind.

9. Lastfahrzeug (1) nach einem der Ansprüche 1 bis 8, **dadurch gekennzeichnet, dass** die von dem mindestens einen Hohlprofil (16) beabstandeten Endbe-reiche der vorderen Trägerteile (15a) jeweils über ein Verlängerungsstück mit dem vorderen Rahmenquerstück (25a) und/oder die von dem mindestens einen Hohlprofil beabstandeten hinteren Endbereiche der hinteren Trägerteile (15b) jeweils über ein Verlängerungsstück mit dem hinteren Rahmenquerstück (25b) verbunden sind.

10. Lastfahrzeug (1) nach Anspruch 8 oder Anspruch 9 wenn dieser auf Anspruch 8 rückbezogen ist, **dadurch gekennzeichnet, dass** zwischen dem vorderen Rahmenquerstück (25a) und dem hinteren Rahmenquerstück (25b) Unterstützungsprofile (27a, 27b) für das Bodenteil angeordnet sind, die im Wesentlichen parallel zu den Rahmenquerstücken (25a, 25b) verlaufen, dass ein erster Endbereich jedes Unterstützungsprofils (27a, 27b) jeweils mit Hilfe von Schrauben und/oder Nieten mit einem Längsträger (15) und ein zweiter Endbereich jedes Unterstützungsprofils (27a, 27b) jeweils mit Hilfe von Schrauben und/oder Nieten mit einem Rahmenlängsstück (26) des Außenrahmens verbunden sind.

11. Lastfahrzeug (1) nach Anspruch 10, **dadurch gekennzeichnet, dass** mindestens ein Unterstützungsprofil (27a) zumindest einen ersten Abschnitt (45a) und einen zweiten Abschnitt (45b) aufweist, die in Erstreckungsrichtung (46) des Unterstützungsprofils (27a) zueinander versetzt angeordnet sind und sich zumindest bereichsweise überdecken, dass die Abschnitte (45a, 45b) Lochungen (47a, 47b) für den Durchtritt von Schrauben, Nieten und/oder Schließringbolzen aufweisen, und dass Lochungen (47a, 47b) derart angeordnet sind, dass in mindestens zwei in Erstreckungsrichtung (46) des Unterstützungsprofils (27a) zueinander versetzten Relativpositionen der Abschnitte (45a, 45b) jeweils mindestens zwei Lochungen (47a) des ersten Abschnitts (45a) mit mindestens zwei Lochungen (47b) des zweiten Abschnitts (45b) fluchten.

12. Lastfahrzeug (1) nach einem der Ansprüche 1 bis 11, **dadurch gekennzeichnet, dass** zwischen den Längsträgern (15) mindestens eine damit verschraubte und/oder vernietete Quertraverse (31 a, 31 b) angeordnet ist, dass das Schwenklager (17) ein erstes Lagerteil (17a) und ein verschwenkbar damit verbundenes zweites Lagerteil (17b) aufweist, und dass das erste Lagerteil (17a) an der Quertraverse (31a, 31 b) und das zweite Lagerteil (17b) an einem Querprofilteil (12a, 12b) des Hilfsrahmens (10) oder des Fahrgestellrahmens (3) angeordnet ist.

13. Lastfahrzeug (1) nach Anspruch 12, **dadurch gekennzeichnet, dass** das erste Lagerteil (17a) einen Vorsprung hat, der zwei vorzugsweise parallel zur Fahrzeuglängsmittelachse verlaufende, schräg zueinander angeordnete erste Wandungen (33) aufweist, dass das zweite Lagerteil (17b) eine Vertiefung aufweist, die zwei etwa parallel zu den ersten Wandungen (33) angeordnete zweite Wandungen (34) hat, und dass zwischen den ersten Wandungen (33) und den zweiten Wandungen (34) mindestens eine erste Elastomerwerkstoffschicht (35a) angeordnet ist, welche die Lagerteile (17a, 17b) miteinander verbindet.

14. Lastfahrzeug (1) nach einem der Ansprüche 1 bis 13, **dadurch gekennzeichnet, dass** es mindestens zwei Schwenklager (17) aufweist, deren Schwenkachsen in der Fahrzeuglängsmittelachse verlaufen, und dass die Auflager (18) in Fahrzeuglängsrichtung jeweils von diesen Schwenklagern (17) beabstandet sind.

15. Lastfahrzeug (1) nach einem der Ansprüche 1 bis 14, **dadurch gekennzeichnet, dass** die Auflager (18) an dem Querträger (16) angeordnet sind, vorzugsweise an den Versteifungsplatten (24).

16. Lastfahrzeug (1) nach einem der Ansprüche 1 bis 15, **dadurch gekennzeichnet, dass** mindestens ein Längsträger (15) über wenigstens eine an einem Zubehörteil angeordnete Querstrebe (30) mit einem zu dem Längsträger (15) benachbarten Rahmenlängsstück (26) des Außenrahmens verbunden ist, dass die Querstrebe (30) an einem dem Längsträger (15) zugewandten Endbereich mindestens eine erste Klemme (44a) und an einem dem Rahmenlängsstück (26) zugewandten Endbereich wenigstens eine zweite Klemme (44b) aufweist, und dass an der ersten Klemme ein Randbereich des Längsträgers (15) und an der zweiten Klemme ein Randbereich des Rahmenlängsstücks (26) eingespannt ist.

## Claims

1. Truck (1) having a flexurally rigid but torsionally flexible chassis frame (3) on which is arranged a flexurally rigid and torsionally rigid superstructure (14) which has at least two longitudinal beams (15) which are spaced apart from one another transversely with respect to the vehicle longitudinal direction and which are connected to one another by means of at least one transverse beam (16) arranged between them, with the superstructure (14) being directly or indirectly connected to the chassis frame (3) via a subframe (10) at at least three points by means of movement bearings, with at least one of the movement bearings being designed as a pivot bearing (17) whose pivot axis runs approximately in the vehicle longitudinal central axis (2), and with at least two movement bearings being designed as support bearings (18) which are arranged laterally to both sides of the pivot axis and which are spaced apart from the pivot bearing (17) in the vehicle longitudinal direction, **characterized in that** the longitudinal beams (15) are designed in each case as an open profile, and the at least one transverse beam (16) is designed as a torsionally rigid hollow profile, **in that** the transverse beam (16) has arranged on it, for each longitudinal beam (15), in each case at least one connecting flange which faces toward the respective longitudinal beam (15), and **in that** the connecting flanges are connected to the longitudinal beams (15) by means of screws, rivets and/or locking ring bolts.

2. Truck (1) according to Claim 1, **characterized in that** the face ends of the hollow profile (16) are welded to the connecting flanges.

3. Truck (1) according to Claim 1 or 2, **characterized in that** the connecting flanges which face toward the individual longitudinal beams (15) are designed as flange plates (23) which are connected to one another in a torsionally rigid manner by means of at least one hollow profile part (21), and **in that** the flange plates (23) project laterally beyond the at least one hollow profile part (21) transversely with respect to the longitudinal extent thereof and have holes through which the screws and/or rivets can be passed.

4. Truck (1) according to Claim 3, **characterized in that** the flange plates (23) are connected to one another in a torsionally rigid manner by means of at least two hollow profile parts (21) which are spaced apart from one another in the direction of the vehicle longitudinal central axis.

5. Truck (1) according to one of Claims 1 to 4, **characterized in that** the at least one hollow profile (16) comprises a round cylindrical hollow profile and/or a box profile designed preferably as a rectangular profile.

6. Truck (1) according to one of Claims 1 to 5, **characterized in that** the longitudinal beams (15) are designed as Z-shaped profiles which have in each case two limb parts (20a, 20b) connected to one another by means of a longitudinal web (19), and **in that** the screws and/or rivets extend preferably through the longitudinal webs (19) and the connecting flanges.

7. Truck (1) according to one of Claims 1 to 6, **characterized in that** the longitudinal beams (15) have at least one front beam part (15a), a rear beam part (15b) and an intermediate piece (15c) arranged between these, **in that** the beam parts (15a, 15b) and the intermediate piece (15c) are arranged as a straight elongation of one another, **in that** the connecting flanges which face toward the longitudinal beams (15) bridge in each case the intermediate piece (15c) of the respective longitudinal beam (15), and **in that** the beam parts (15a, 15b) and the intermediate piece (15c) are connected to the connecting flange facing toward them in each case by means of screws and/or rivets.

8. Truck (1) according to one of Claims 1 to 7, **characterized in that** the superstructure (14) has an outer frame with a front frame transverse piece (25a) and a rear frame transverse piece (25b) and two frame longitudinal pieces (26) connecting these to one another, and **in that** the front frame transverse piece (25a) and the rear frame transverse piece (25b) have connecting points which are connected to the longitudinal beams (15) by means of screws and/or rivets.

9. Truck (1) according to one of Claims 1 to 8, **characterized in that** those end regions of the front beam parts (15a) which are spaced apart from the at least one hollow profile (16) are connected in each case by means of an elongation piece to the front frame transverse piece (25a), and/or the rear end regions, which are spaced apart from the at least one hollow profile, of the rear beam parts (15b) are connected in each case by means of an elongation piece to the rear frame transverse piece (25b).

10. Truck (1) according to Claim 8 or Claim 9 if it refers back to Claim 8, **characterized in that** supporting profiles (27a, 27b) for the floor part are arranged between the front frame transverse piece (25a) and the rear frame transverse piece (25b) and run substantially parallel to the frame transverse pieces (25a, 25b), **in that** a first end region of each supporting profile (27a, 27b) is connected in each case by means of screws and/or rivets to a longitudinal beam (15), and a second end region of each supporting profile (27a, 27b) is connected in each case by means of screws and/or rivets to a frame longitudinal piece (26) of the outer frame.

11. Truck (1) according to Claim 10, **characterized in that** at least one supporting profile (27a) has at least one first section (45a) and one second section (45b) which are arranged offset with respect to one another in the direction of extent (46) of the supporting profile (27a) and which overlap at least in regions, **in that** the sections (45a, 45b) have holes (47a, 47b) through which screws, rivets and/or locking ring bolts can pass, and **in that** holes (47a, 47b) are arranged such that, in at least two relative positions, which are offset with respect to one another in the direction of extent (46) of the supporting profile (27a), of the sections (45a, 45b), in each case at least two holes (47a) of the first section (45a) are in alignment with at least two holes (47b) of the second section (45b).

12. Truck (1) according to one of Claims 1 to 11, **characterized in that** at least one transverse traverse (31a, 31b) is arranged between the longitudinal beams (15) and is screwed and/or riveted to these, **in that** the pivot bearing (17) has a first bearing part (17a) and a second bearing part (17b) which is pivotably connected thereto, and **in that** the first bearing part (17a) is arranged on the transverse traverse (31a, 31b) and the second bearing part (17b) is arranged on a transverse profile part (12a, 12b) of the subframe (10) or of the chassis frame (3).

13. Truck (1) according to Claim 12, **characterized in that** the first bearing part (17a) has a projection which has two first walls (33) preferably running parallel to the vehicle longitudinal axis and arranged obliquely with respect to one another, **in that** the second bearing part (17b) has a depression which has two walls (34) arranged approximately parallel to the first walls (33), and **in that** at least one first elastomer material layer (35a) which connects the bearing parts (17a, 17b) to one another is arranged between the first walls (33) and the second walls (34).

14. Truck (1) according to one of Claims 1 to 13, **characterized in that** it has at least two pivot bearings (17) whose pivot axes run in the vehicle longitudinal central axis, and **in that** the support bearings (18) are in each case spaced apart from said pivot bearings (17) in the vehicle longitudinal direction.

15. Truck (1) according to one of Claims 1 to 14, **characterized in that** the support bearings (18) are arranged on the transverse beam (16), preferably on the stiffening plates (24).

16. Truck (1) according to one of Claims 1 to 15, **characterized in that** at least one longitudinal beam (15) is connected to a frame longitudinal piece (26), which is adjacent to the longitudinal beam (15), of the outer frame by means of at least one transverse strut (30) arranged on an accessory part, **in that** the transverse strut (30) has at least one first clamp (44a) at an end region facing toward the longitudinal beam (15) and has at least one second clamp (44b) at an end region facing toward the frame longitudinal piece (26), and **in that** an edge region of the longitudinal beam (15) is clamped on the first clamp and an edge region of the frame longitudinal piece (26) is clamped on the second clamp.

## Revendications

1. Véhicule utilitaire (1) comprenant un châssis (3) rigide en flexion mais déformable en torsion, sur lequel est disposée une caisse (14) rigide en flexion et en torsion, qui présente au moins deux supports longitudinaux (15) espacés l'un de l'autre transversalement à la direction longitudinale du véhicule, lesquels sont reliés l'un à l'autre par au moins une traverse (16) disposée entre eux, la caisse (14) étant reliée en au moins trois points par le biais de paliers de mouvement directement ou indirectement par le biais d'un cadre auxiliaire (10) au châssis (3), au moins l'un des paliers de mouvement étant réalisé sous forme de palier pivotant (17), dont l'axe de pivotement s'étend approximativement dans l'axe médian longitudinal du véhicule (2), et au moins deux paliers de mouvement étant réalisés sous forme d'appuis (18) qui sont disposés latéralement de chaque côté de l'axe de pivotement et qui sont espacés du palier pivotant (17) dans la direction longitudinale du véhicule, **caractérisé en ce que** les supports longitudinaux (15) sont configurés à chaque fois sous forme de profilé ouvert et l'au moins une traverse (16) est configurée sous forme de profilé creux rigide en torsion, **en ce que** sur la traverse (16), pour chaque support longitudinal (15), est disposée à chaque fois une bride de liaison tournée vers le support longitudinal associé (15), et **en ce que** les brides de liaison sont connectées aux supports longitudinaux (15) à l'aide de vis, rivets et/ou de boulons à bague de serrage.

2. Véhicule utilitaire (1) selon la revendication 1, **caractérisé en ce que** les extrémités frontales du profilé creux (16) sont soudées aux brides de liaison.

3. Véhicule utilitaire (1) selon la revendication 1 ou 2, **caractérisé en ce que** les brides de liaison tournées vers les supports longitudinaux individuels (15) sont configurées sous forme de plaques à brides (23), qui sont reliées de manière rigide en torsion les unes aux autres par au moins une partie profilée creuse (21), et **en ce que** les plaques à brides (23), transversalement à l'étendue longitudinale de l'au moins une partie profilée creuse (21), font saillies latéralement au-delà de celle-ci, et présentent des perforations pour le passage des vis et/ou des rivets.

4. Véhicule utilitaire (1) selon la revendication 3, **caractérisé en ce que** les plaques à brides (23) sont reliées l'une à l'autre de manière rigide en torsion par au moins deux parties profilées creuses (21) espacées l'une de l'autre dans la direction de l'axe médian longitudinal du véhicule.

5. Véhicule utilitaire (1) selon l'une quelconque des revendications 1 à 4, **caractérisé en ce que** l'au moins un profilé creux (16) comprend un profilé creux cylindrique circulaire et/ou un profilé en caisson configuré de préférence sous forme de profilé rectangulaire.

6. Véhicule utilitaire (1) selon l'une quelconque des revendications 1 à 5, **caractérisé en ce que** les supports longitudinaux (15) sont réalisés sous forme de profilés en Z, qui présentent à chaque fois deux parties de branches (20a, 20b) reliées l'une à l'autre par une partie d'âme longitudinale (19), et **en ce que** les vis et/ou les rivets traversent de préférence les parties d'âme longitudinales (19) et les brides de liaison.

7. Véhicule utilitaire (1) selon l'une quelconque des revendications 1 à 6, **caractérisé en ce que** les supports longitudinaux (15) présentent au moins une partie de support avant (15a), une partie de support arrière (15b) et une partie intermédiaire (15c) disposée entre eux, **en ce que** les parties de support (15a, 15b) et la partie intermédiaire (15c) sont disposées suivant un alignement rectiligne les unes par rapport aux autres, **en ce que** les brides de liaison tournées vers les supports longitudinaux (15) surmontent à chaque fois la partie intermédiaire (15c) du support longitudinal associé (15), et **en ce que** les parties de support (15a, 15b) et la partie intermédiaire (15c) sont à chaque fois reliées à l'aide de vis et/ou de rivets à la bride de liaison tournée vers elles.

8. Véhicule utilitaire (1) selon l'une quelconque des revendications 1 à 7, **caractérisé en ce que** la caisse (14) présente un cadre extérieur avec une partie transversale avant de cadre (25a) et une partie transversale arrière de cadre (25b), ainsi que deux parties longitudinales de cadre (26) reliant celles-ci, et **en ce que** la partie transversale avant de cadre (25a) et la partie transversale arrière de cadre (25b) présentent des points de liaison qui sont reliés aux supports longitudinaux (15) à l'aide de vis et/ou de rivets.

9. Véhicule utilitaire (1) selon l'une quelconque des revendications 1 à 8, **caractérisé en ce que** les régions d'extrémité des parties de support avant (15a) espacées de l'au moins un profilé creux (16) sont reliées à chaque fois par le biais d'une partie de prolongement à la partie transversale avant de cadre (25a) et/ou les régions d'extrémité des parties de support arrière (15b) espacées de l'au moins un profilé creux sont reliées à chaque fois par le biais d'une partie de prolongation à la partie transversale arrière de cadre (25b).

10. Véhicule utilitaire (1) selon la revendication 8 ou la revendication 9 lorsqu'elle se rapporte à la revendication 8, **caractérisé en ce qu'**entre la partie transversale avant de cadre (25a) et la partie transversale arrière de cadre (25b) sont disposés des profilés de support (27a, 27b) pour la partie de fond, lesquels s'étendent essentiellement parallèlement aux parties transversales de cadre (25a, 25b), **en ce qu'**une première région d'extrémité de chaque profilé de support (27a, 27b) est reliée à chaque fois à l'aide de vis et/ou de rivets à un support longitudinal (15) et une deuxième région d'extrémité de chaque profilé de support (27a, 27b) est reliée à chaque fois à l'aide de vis et/ou de rivets à une partie longitudinale de cadre (26) du cadre extérieur.

11. Véhicule utilitaire (1) selon la revendication 10, **caractérisé en ce qu'**au moins un profilé de support (27a) présente au moins une première portion (45a) et une deuxième portion (45b), qui sont disposées de manière décalée l'une par rapport à l'autre dans la direction d'étendue (46) du profilé de support (27a), et qui se recouvrent au moins en partie, **en ce que** les portions (45a, 45b) présentent des perforations (47a, 47b) pour le passage de vis, rivets et/ou boulon à bague de serrage, et **en ce que** des perforations (47a, 47b) sont disposées de telle sorte que dans au moins deux positions relatives décalées l'une par rapport à l'autre des portions (45a, 45b) dans la direction d'étendue (46) du profilé de support (27a), à chaque fois au moins deux perforations (47a) de la première portion (45a) soient en affleurement avec au moins deux perforations (47b) de la deuxième portion (45b).

12. Véhicule utilitaire (1) selon l'une quelconque des revendications 1 à 11, **caractérisé en ce qu'**entre les supports longitudinaux (15) est disposé au moins une traverse (31a, 31b) vissée et/ou rivetée à ceux-ci, **en ce que** le palier pivotant (17) présente une première partie de palier (17a) et une deuxième partie de palier (17b) connectée de manière pivotante à celle-ci, et **en ce que** la première partie de palier (17a) est disposée sur la traverse (31a, 31b) et la deuxième partie de palier (17b) est disposée sur une partie profilée transversale (12a, 12b) du cadre auxiliaire (10) ou du châssis (3).

13. Véhicule utilitaire (1) selon la revendication 12, **caractérisé en ce que** la première partie de palier (17a) présente une saillie qui présente deux premières parois (33) s'étendant de préférence parallèlement à l'axe médian longitudinal du véhicule et disposées obliquement l'une par rapport à l'autre, **en ce que** la deuxième partie de palier (17b) présente un renfoncement qui présent deux parois (34) disposées approximativement parallèlement aux premières parois (33), et **en ce qu'**entre les premières parois (33) et les deuxièmes parois (34) est disposée au moins une première couche de matériau élastomère (35a), qui relie l'une à l'autre les parties de palier (17a, 17b).

14. Véhicule utilitaire (1) selon l'une quelconque des revendications 1 à 13, **caractérisé en ce qu'**il présente au moins deux paliers pivotants (17), dont les axes de pivotement s'étendent suivant l'axe médian longitudinal du véhicule et **en ce que** les appuis (18) sont espacés dans la direction longitudinale du véhicule à chaque fois de ces paliers pivotants (17).

15. Véhicule utilitaire (1) selon l'une quelconque des revendications 1 à 14, **caractérisé en ce que** les appuis (18) sont disposés sur la traverse (16), de préférence sur les plaques de renforcement (24).

16. Véhicule utilitaire (1) selon l'une quelconque des revendications 1 à 15, **caractérisé en ce qu'**au moins un support longitudinal (15) est relié par le biais d'au moins un montant transversal (30) disposé sur une partie accessoire à une partie longitudinale de cadre (26) du cadre extérieur adjacente au support longitudinal (15), **en ce que** le montant transversal (30) présente, au niveau d'une région d'extrémité tournée vers le support longitudinal (15), au moins une première pince (44a) et au niveau d'une région d'extrémité tournée vers la partie longitudinale de cadre (26), au moins une deuxième pince (44b), et **en ce qu'**une région de bord du support longitudinal (15) est serrée au niveau de la première pince et une région de bord de la partie longitudinale de cadre (26) est serrée au niveau de la deuxième pince.
